# EUROPEAN PATENT APPLICATION

(11) **EP 4 827 075 A1**
(43) Date of publication of application: **21.10.2026**
(21) Application number: 24903581.7
(22) Date of filing: 04.12.2024
(51) Int. Cl.: H04M 11/00, E05B 49/00, G01S 11/02

(54) **COMMUNICATION CONNECTION MANAGEMENT SYSTEM, COMMUNICATION CONNECTION MANAGEMENT METHOD, AND COMPUTER**

(30) Priority: 13.12.2023 JP 2023210528
(71) Applicant: DENSO CORPORATION, Aichi-pref 448-8661 (JP)
(72) Inventor: TAKASHIMA, Kei, Kariya- city, Aichi-pref. 448-8661 (JP); SAIKI, Takashi, Kariya- city, Aichi-pref. 448-8661 (JP); NAKANO, Yuichiro, Kariya- city, Aichi-pref. 448-8661 (JP); INAGAKI, Tatsuya, Kariya- city, Aichi-pref. 448-8661 (JP); SUGIYAMA, Hironao, Kariya- city, Aichi-pref. 448-8661 (JP)
(74) Representative: Winter, Brandl - Partnerschaft mbB
(86) International application number: PCT/JP2024/042906
(87) International publication number: WO 2025/126924

(57) **Abstract**

A communication connection management system includes a BLE module (2) that performs a wireless communication with a mobile device (9). In the wireless communication with the mobile device (9) via the BLE module (2), priority information is obtained from the mobile device (9) to determine whether the communication connection with the mobile device (9) should be prioritized over other mobile devices. When the system is currently communicating with multiple mobile devices (9) up to the maximum connection number and the communication connection with the new device (9) is determined to be prioritized based on priority information, the system disconnects the communication connection with one of the currently connected maximum connection number of mobile devices (9) and establishes a communication connection with the new device (9).

## Description

### CROSS REFERENCE TO RELATED APPLICATION

This application is based on Japanese Patent Application No. 2023-210528 filed on December 13, 2023, the disclosure of which is incorporated herein by reference.

### TECHNICAL FIELD

The present disclosure relates to a technology for managing communication connection between a target object and multiple mobile devices.

### BACKGROUND ART

Patent Literature 1 discloses a system that is able to prioritize a communication connection with a mobile terminal carried by a user who is estimated to have a higher need for communication connection even in a case where the total number of mobile terminals simultaneously connected to the same vehicle is less than the number of vehicle users. In the system described in Patent Literature, the priority order of each mobile terminal is determined based on a position of the mobile terminal and whether or not the mobile terminal has received information related to vehicle control request. Specifically, the mobile terminal that has received the information related to vehicle control request is given the highest priority, and the priorities of remaining mobile terminals are determined in descending order from the closest position to the furthest position with respect to the vehicle. When it becomes necessary to simultaneously establish communication connections with more than a specified number of mobile terminals, the system in Patent Literature 1 selects, based on the determined priority, a mobile terminal with which the connection has been established to disconnect the communication connection.

### PRIOR ART LITERATURE

### PATENT LITERATURE

Patent Literature 1: JP 2021-136457 A

### SUMMARY

The system described in Patent Literature 1 does not consider the characteristics of the mobile terminal when selecting a mobile terminal with which the connection is to be established for communication purpose. For example, when a mobile terminal is owned by the vehicle owner, it is desirable to prioritize the communication connection between the mobile terminal owned by the vehicle owner and the vehicle over other mobile terminals in order to ensure the convenience of vehicle owner. When the mobile terminal is a friend terminal held by a user authorized by the owner (such as family, friends, service providers, or valet parking attendants) and there is a high probability that the user, who carries the friend terminal, tries to access or use the vehicle if the friend terminal approaches the vehicle, a higher priority may be assigned to the friend terminal to establish a communication connection with the vehicle over other mobile terminals.

The present disclosure is made in view of the above-mentioned point, and aims to provide a communication connection management system, a communication connection management method, and a computer, each of which can easily ensure a communication connection of a mobile device with a target object when the mobile device needs to be given a higher priority in establishing the communication connection with the target object over other mobile devices.

To achieve the above objective, according to an aspect of the present disclosure, a communication connection management system manages a communication connection between a target object and multiple mobile devices. The communication connection management system includes a communication unit mounted on the target object and configured to perform a wireless communication with each of the multiple mobile devices. The communication unit sets a maximum connection number for the multiple mobile devices with which the communication connection can be established. The communication connection management system includes an acquisition unit configured to, in a case where a certain device, which is one of the multiple mobile devices, should be prioritized for the communication connection, acquire priority information from the certain device by performing the wireless communication with the certain device using the communication unit. The priority information indicates that the certain device is required to be given the priority for the communication connection. The communication connection management system includes a communication connection control unit configured to, in a case where the number of the multiple mobile devices currently in communication connection states is equal to the maximum connection number and the acquisition unit newly acquires the priority information from a new device, which is one of the multiple mobile devices, by performing the wireless communication with the new device, disconnect the communication connection with one of the multiple mobile devices currently in the communication connection states and establish the communication connection with the new device.

According to another aspect, a communication connection management method is executed by a computer for managing a communication connection between a target object and multiple mobile devices. The target object has a communication unit that performs a wireless communication with each of the multiple mobile devices, and the communication unit sets a maximum connection number for the multiple mobile devices with which the communication connection can be established. The communication connection management method includes acquiring, in a case where one of the multiple mobile devices should be prioritized for the communication connection, priority information from the one of the multiple mobile devices by performing the wireless communication with the one of the multiple mobile devices using the communication unit, the priority information indicating that the one of the multiple mobile devices is required to be given the priority for the communication connection. The communication connection management method includes, in a case where the number of the multiple mobile devices currently in communication connection states is equal to the maximum connection number and the priority information is acquired from a new device, which is one of the multiple mobile devices, by performing the wireless communication with the new device, disconnecting the communication connection with one of the multiple mobile devices currently in the communication connection states and establishing the communication connection with the new device.

According to another aspect, a computer executes a process to manage a communication connection between a target object and multiple mobile devices. The target object has a communication unit that performs a wireless communication with each of the multiple mobile devices, and the communication unit sets a maximum connection number for the multiple mobile devices with which the communication connection can be established. The computer is configured to execute the following instructions. The instructions includes: acquiring, in a case where one of the multiple mobile devices should be prioritized for the communication connection, priority information from the one of the multiple mobile devices by performing the wireless communication with the one of the multiple mobile devices using the communication unit, the priority information indicating that the one of the multiple mobile devices is required to be given the priority for the communication connection; and in a case where the number of the multiple mobile devices currently in communication connection states is equal to the maximum connection number and the priority information is acquired from a new device, which is one of the multiple mobile devices, by performing the wireless communication with the new device, disconnecting the communication connection with one of the multiple mobile devices currently in the communication connection states and establishing the communication connection with the new device.

According to the above-described communication connection management system, the communication connection management method, and the computer of the present disclosure, in a case where the mobile device should be prioritized for the communication connection, the priority information indicating that the mobile device should be prioritized for communication connection is obtained from the mobile device by the communication unit performing the wireless communication. When the priority information is obtained by performing the wireless communication with the new device while the communication connection with maximum connection number of mobile devices are being maintained, the communication connection with one of the currently connected mobile devices will be disconnected, and a communication connection with the new device will be established. With this configuration, it becomes possible to easily secure the communication connection between the target object and the mobile device that has a reason to be prioritized over other mobile devices, that is, the mobile device from which the priority information has been obtained.

The reference symbols and/or numerals in parentheses of claims are merely added to indicate examples of correspondence relationships with concrete structures in the below-described embodiments in order to facilitate the understanding of the present disclosure, which has no intention to limit the scope of the present disclosure in any manner.

Technical features described in claims other than the above-mentioned features become apparent from the description of the embodiments and the accompanying drawings.

### BRIEF DESCRIPTION OF DRAWINGS

FIG. 1 is a diagram showing an overall view of a vehicle electronic key system to which a communication connection management system is applied.
FIG. 2 is a block diagram showing a configuration of a mobile device.
FIG. 3 is a block diagram showing a configuration of a vehicle-mounted system.
FIG. 4 is a diagram showing an arrangement example of BLE modules in a vehicle.
FIG. 5 is a block diagram showing a configuration of the BLE module.
FIG. 6 is a diagram schematically showing a flow of CS ranging process.
FIG. 7 is a diagram showing an operation of a mobile device and a vehicle-mounted system when the mobile device and the vehicle-mounted system have not yet established a communication connection.
FIG. 8 is a diagram showing an operation of a mobile device and a vehicle-mounted system when a communication connection is established between the mobile device and the vehicle-mounted system, and the mobile device and the BLE module periodically communicate data via BLE communication.
FIG. 9 is a diagram showing an operation of a mobile device and a vehicle-mounted system when the mobile device and the vehicle-mounted system perform CS ranging communication.
FIG. 10 is a functional block diagram of a main controller.
FIG. 11 is a diagram showing an example of areas set inside and outside a vehicle in order to determine position of the device belongs to which area.
FIG. 12 is a flowchart showing an example of a communication connection management process that limits the number of mobile devices establishing communication connection at the same time to a predetermined maximum connection number.
FIG. 13 is a diagram showing an example of mobile devices to be set as communication connection target based on the area where the mobile device is positioned and whether the digital key application has been started.
FIG. 14 is a diagram showing several examples of how to determine the priority of a mobile device that currently has the communication connection and the priority of a mobile device that has accepted a connection request and plans to establish a new communication connection.
FIG. 15 is an explanatory diagram showing an operation performed by the process shown in the flowchart of FIG. 12.
FIG. 16 is a flowchart showing an example of a communication connection management process that limits the number of mobile devices establishing communication connection at the same time to a predetermined maximum connection number according to a second embodiment.
FIG. 17 is an explanatory diagram showing an operation performed by the process shown in the flowchart of FIG. 16.
FIG. 18 is a flowchart showing an example of a communication connection management process that limits the number of mobile devices establishing communication connection at the same time to a predetermined maximum connection number according to a third embodiment.
FIG. 19 is an explanatory diagram showing an operation performed by the process shown in the flowchart of FIG. 18.
FIG. 20 is a block diagram showing a configuration of a mobile device according to a fourth embodiment.
FIG. 21 is a block diagram showing a configuration of a vehicle-mounted system according to the fourth embodiment.
FIG. 22 is a diagram showing an arrangement example of BLE modules and UWB modules in a vehicle according to the fourth embodiment.
FIG. 23 is a diagram showing an operation of a mobile device and a vehicle-mounted system when the mobile device and the vehicle-mounted system perform UWB ranging communication.
FIG. 24 is a diagram showing a configuration according to a modification example.

### DESCRIPTION OF EMBODIMENTS

The following will describe embodiments of a communication connection management system, a communication connection management method, and a computer, which are applied to a vehicle electronic key system of a vehicle with reference to the accompanying drawings. In other words, in the present embodiment, in the vehicle electronic key system, the number of communication connections with the mobile devices 9 used as electronic keys is limited to the maximum connection number while prioritizing communication connection with the mobile device 9 from which priority information has been acquired. However, the present disclosure is not limited to the following embodiments, and various modifications described below are also included in the technical scope of the present disclosure. In addition to the following embodiments, various modifications can be made without departing from the spirit of the present disclosure. The embodiments and various modification examples can be combined as appropriate within the scope of the present disclosure without causing any technical contradiction. Components having the same function are denoted by the same reference symbol, and the description thereof may be omitted. In addition, in a case where only a part of the configuration is referred to in an embodiment or modification example, the description in the foregoing embodiment may be applied to the remaining configuration.

### (First Embodiment)

### (Overall configuration)

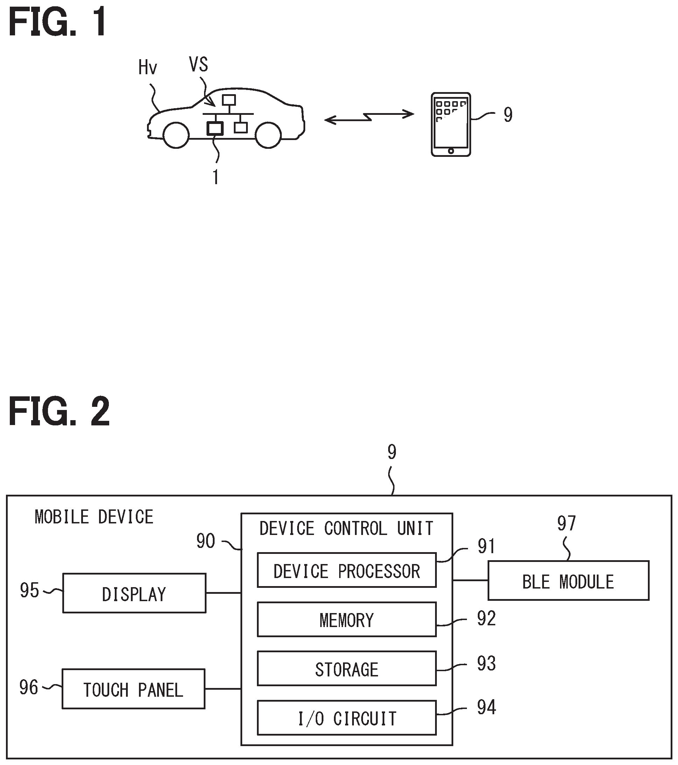

As shown in FIG. 1, a vehicle electronic key system of the present embodiment includes a vehicle-mounted system VS and a mobile device 9. The vehicle-mounted system VS includes a digital key ECU (hereinafter referred to as DK-ECU) 1. The DK-ECU 1 corresponds to the computer of the present disclosure. ECU is an abbreviation for electronic control unit and means an electronic control unit. The DK-ECU 1 may be implemented by a computer, microcontroller, or processor.

### (About DK-ECU 1)

The DK-ECU 1 is configured to perform wireless communication compliant with Bluetooth LE (hereinafter referred to as BLE communication) with a mobile device 9 carried by the user of the vehicle Hv. Bluetooth is registered trademark. The DK-ECU 1 is configured to perform BLE channel sounding communication (hereinafter referred to as BLECS communication) with the mobile device 9. The BLECS communication will be discussed later. The following describes a case where the DK-ECU 1 serves as a master and the mobile device 9 serves as a slave in BLE communication performed between the DK-ECU 1 and the mobile device 9. The description of master can be read as central or scanner. The description of slave can be read as a peripheral or an advertiser.

The DK-ECU 1 establishes a communication connection with the mobile device 9 by receiving an advertising signal from the mobile device 9 and transmitting a relay signal to the corresponding mobile device 9. An advertising signal is a signal used to notify other devices of its presence, that is, to advertise. The advertising signal and response signal each includes information indicating the transmission source and, if necessary, the transmission destination. The source and destination can be represented by identifiers such as device IDs. The advertising signal (or response signal) also includes information indicating whether or not the digital key application, which is to be described later, has been started. In another embodiment, the vehicle electronic key system may be configured such that the mobile device 9 serves as the master and the DK-ECU 1 serves as the slave in the communication between the mobile device and the DK-ECU 1. The role of each device can be interchanged. The functions and configurations of the DK-ECU 1 and the mobile device 9 can be changed as appropriate in accordance with the changing of roles.

In the present disclosure, a wireless signal conforming to the BLE standard is referred to as a BLE signal. The BLE signal from the advertising channel may be referred to as the advertising signal, and the BLE signal from the data channel may be referred to as data signal. Of the 40 channels used for BLE communication, channels numbered 37 through 39 are designated as advertising channels. A channel with a channel number of 0 to 36 corresponds to a data channel. The definitions of the advertising channel and data channel, as well as their specific frequency values, are determined according to the BLE standard. In response to changes in the BLE standard, the configuration of the present disclosure may be modified as appropriate to comply with the revised standard.

### (Mobile Device 9)

The mobile device 9 is a portable and general-purpose information processing terminal having a BLE communication function. As the mobile device 9, various communication terminals, such as a smartphone or a wearable device can be adopted. The wearable device is a device to be worn on the user body and can adopt various forms, such as wristband, wristwatch, ring, eyeglass, and earphone types. The mobile device 9 may also be referred to as a user device, a key device, or the like.

The mobile device 9 may be a smart key, which is a dedicated device that serves as the electronic key for the vehicle Hv. Usually, the smart key is transferred to the owner together with the vehicle Hv when the vehicle Hv is purchased. A smart key can be understood as one of the accessories for a vehicle Hv. The smart key may be referred to as a mobile device for vehicle, a key fob, a key card, an access key, or the like.

As shown in FIG. 2, the mobile device 9 includes a device control unit 90, a display 95, a touch panel 96, and a BLE module 97.

The device control unit 90 is a module that controls an entire operation of the mobile device 9. The device control unit 90 is configured by a computer, for example, equipped with a device processor 91, memory 92, storage 93, input output circuit 94, or the like. The device processor 91 is, for example, a CPU (Central Processing Unit). The memory 92 is a volatile storage medium, such as RAM (Random Access Memory). The storage 93 includes a non-volatile storage medium, such as flash memory. The input output circuit 94 is a circuit for the device control unit 90 to receive signals from other components within the mobile device 9 and to output signals to other components within the mobile device 9.

The storage 93 may store the device ID and a key code used for wireless authentication between the DK-ECU 1. The key code may also be referred to as an encryption key or the like. A digital key application, which is application software for causing the mobile device 9 to function as a key of vehicle Hv, may be installed in the storage 93. In the present disclosure, application may be simply referred to as app.

The digital key application is an application for performing a secure communication with the DK-ECU 1, and for responding to inquiries or requests from the DK-ECU 1. When the communication connection is established between the mobile device 9 and the DK-ECU 1, the digital key application enables the following functions. Unlocking/locking of the doors of vehicle Hv in response that the user holding the mobile device 9 touches the door handle sensor or operates door switch. Remotely unlocking/locking the doors of vehicle (remote key entry (RKE)) when the user in an area away from the vehicle Hv operates a button of the digital key application. Activating a buzzer to let the user find the parked vehicle Hv in a large parking lot (panic). Displaying a status of the vehicle Hv (for example, fuel level, tire pressure, inside temperature, and/or an unlocked state of the doors of vehicle Hv) on the mobile device 9 (vehicle status confirmation). These functions provided by the digital key application become available on the mobile device 9 when the digital key application is started. When the digital key application is not started on the mobile device 9, the user cannot access or use the vehicle Hv.

The display 95 is, for example, a liquid crystal display or an organic EL display. The display 95 displays an image according to a signal input from the device control unit 90. The touch panel 96 is, for example, a capacitive touch panel, which is arranged on the display 95. The touch panel 96 is an input device included in the mobile device 9. The display 95 and touch panel 96 correspond to interfaces for the user to enter a password into the mobile device 9 to log in to the digital key application, to input an operation for pairing the mobile device 9 with the vehicle-mounted system VS, or to instruct the above-described functions to the vehicle from a position away from the vehicle Hv.

The BLE module 97 is a communication module for performing BLE communication. The BLE module 97 includes a received strength detection unit, which is a functional unit that measures a strength of the received signal. The measured signal strength can also be referred to as RSSI (Received Signal Strength Indicator). The BLE module 97 outputs data indicating the measured received strength, along with source information, to the device control unit 90, in addition to the received data.

The BLE module 97 may be configured to transmit and receive, in addition to the modulated signal for data communication, continuous wave (CW) signal having predetermined waveform as a signal for CS (Channel Sounding) ranging, which will be described later. The CW signal may have a waveform of a sine wave or a triangular wave. The BLE module 97 may have the same configuration as a BLE module 2 included in the vehicle-mounted system VS, which will be described later. The description of BLE module 2 may be partially or entirely adapted to the BLE module 97.

The device control unit 90 causes the BLE module 97 to transmit an advertising signal at a predetermined transmission interval (advertise interval) in order to initiate the BLE communication with the vehicle-mounted system VS. In the present disclosure, the advertising signal corresponds to a connection request signal. The device control unit 90 establishes a BLE communication connection with the vehicle-mounted system VS based in response that the BLE module 97 has received a connection request transmitted from the vehicle-mounted system VS in response to the advertising signal. The device control unit 90 may perform an authentication process in wireless manner (hereinafter referred to as wireless authentication process) based on the establishment of communication connection with the vehicle-mounted system VS. The wireless authentication process may be performed, for example, by a challenge-response method. In this case, in response to receiving a challenge code from the vehicle-mounted system VS, the device control unit 90 may generate a response code using the key code and transmit the generated response code back to the vehicle-mounted system VS.

The device control unit 90 uses the BLE module 97 to perform the communication for CS ranging in response to a request from the vehicle-mounted system VS. For example, the device control unit 90 causes the BLE module 97 to transmit a CW signal of a specified channel (or frequency) based on a request from the vehicle-mounted system VS. The interaction between the device control unit 90 and the vehicle-mounted system VS will be described later.

### (About vehicle-mounted systems VS)

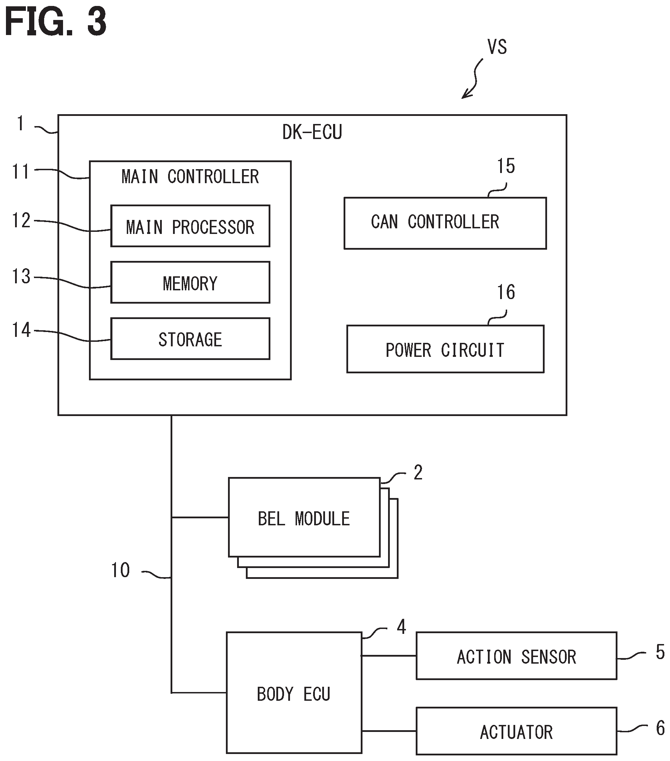

As shown in FIG. 3, the vehicle-mounted system VS includes the DK-ECU 1, the BLE module 2 functioning as a communication unit, a body ECU 4, an action sensor 5, and an actuator 6. The DK-ECU 1, the BLE module2, the body ECU4 are connected with one another via, for example, an in-vehicle network. As the standard of the in-vehicle network, various standards such as Controller Area Network (CAN: registered trademark), Ethernet (registered trademark), FlexRay (registered trademark), and the like can be adopted. The following explanation will focus on the case where CAN is adopted as the standard for in-vehicle network. The body ECU 4 is connected to the action sensor 5 and the actuator 6. The connection configuration of the components disclosed herein is an example and the configuration of connection can be modified as appropriate.

The DK-ECU 1 performs a process for determining the position of the mobile device 9 relative to the vehicle Hv based on the BLE signal (more specifically, the RSSI ranging result and CS ranging result of the BLE signal) communicated between the BLE module 2 of the vehicle-mounted system VS and the BLE module 97 of the mobile device 9. For example, the DK-ECU 1 calculates ranging data indicating the distance (hereinafter referred to as device distance) between each BLE module 2 and the mobile device 9 based on the BLECS signal communicated between the multiple BLE modules 2 and the mobile device 9. Based on the ranging data, the DK-ECU 1 determines the position of the mobile device 9 relative to the vehicle Hv, and determines whether the mobile device 9 is located in an entry area (nearby area) defined outside the vehicle or an engine start area defined inside the vehicle, thereby detecting the position of the mobile device 9. Since the mobile device 9 corresponds to the user, detecting position of the mobile device is equivalent to detecting the position of user.

As shown in FIG. 3, the DK-ECU 1 includes a main controller 11, a CAN controller 15, and a power supply circuit 16. The main controller 11 is a computer that performs various processes related to detecting the position of the mobile device 9. The main controller 11 includes a main processor 12, a memory 13, and a storage 14. The main processor 12 is, for example, a CPU that performs predetermined process according to software. The memory 13 is a volatile storage medium, such as RAM.

The storage 14 includes a non-volatile storage medium, such as flash memory. The storage 14 stores programs to be executed by the main processor 12. The programs may include a device position detection program and a communication connection management program for managing the number of mobile devices with which the communication connection can be simultaneously established. For example, when the main processor 12 executes the communication connection management program, it is equivalent to executing a communication connection management method corresponding to the program. The storage 14 stores registration data, such as a device ID of the mobile device 9 corresponding to the owner device (for example, a preliminarily assigned Bluetooth address), and a device IDs of a mobile device 9 that has previously established BLE communication connection with the vehicle. In addition, the storage 14 stores data indicating the mounting position of each BLE module 2 in the vehicle Hv.

The CAN controller 15 performs, in response to an instruction from the main controller 11, communication process with other components of the vehicle-mounted system VS according to CAN protocol. The CAN controller 15 performs transmission process, receiving process, and arbitration process as communication process. For example, the CAN controller 15 performs the receiving process in response that a data frame is stored in the receive buffer, and transmits the received data to the main controller 11. The receiving process includes determining whether the received data frame is a corrupted or invalid data frame by form checking, staff checking, and cyclic redundancy checking. When a data frame is stored in the transmission buffer, the CAN controller 15 performs arbitration with other transmission signals by performing an arbitration process, and transmits the data to other components of the vehicle-mounted system VS.

The power supply circuit 16 is a circuit module that supplies power to the main controller 11, the CAN controller 15, and others. The power supply circuit 16 converts the voltage input from the power cable (for example, battery voltage) into a voltage suitable for the operation of the main controller 11 and the CAN controller 15, and supplies the converted voltage to each component.

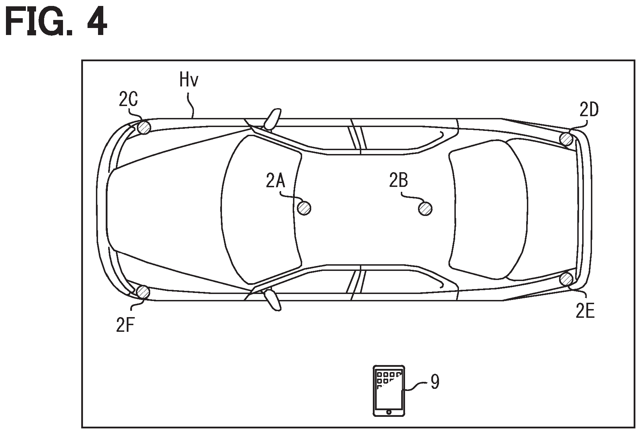

The BLE module 2 is a communication module for performing BLE communication. In the present embodiment, multiple BLE modules 2 are installed in the vehicle Hv. Each BLE module 2 is also referred to as an anchor. For example, as shown in FIG. 4, the BLE module 2 may include, for example, a front inside anchor 2A, a rear inside anchor 2B, a right front anchor 2C, a right rear anchor 2D, a left rear anchor 2E, and a left front anchor 2F. The front inside anchor 2A and the rear inside anchor 2B are both BLE modules 2 located inside the vehicle. The right front anchor 2C, the right rear anchor 2D, the left rear anchor 2E, and the left front anchor 2F are all BLE modules 2 located on the outer surface of the vehicle Hv. The configuration and performance of each BLE module 2 may be substantially the same regardless of the installation location. Note that the arrangement example of multiple BLE modules 2 shown in FIG. 4 is one example, and the multiple BLE modules 2 may be arranged in different locations from the example shown in FIG. 4.

The BLE module 2 is configured to transmit and receive CW signals for each channel (or frequency) as signals for CS ranging, in addition to modulated signals for data communication. The BLE module 2 is configured to scan advertising signals even while the vehicle Hv is in parked state, using power supplied from the vehicle battery.

The body ECU 4 is configured to detect a user operation (action) made on the vehicle Hv based on an input signal from the action sensor 5, and operate the actuator 6 in accordance with the detected user operation. Examples of the action made on the vehicle Hv by the user include a locking operation, an unlocking operation, seating, pressing of a start switch, stepping on a brake pedal, and the like. The action sensors 5 may include, for example, door sensors provided on the external door handles, start switch, brake pedal sensor, and seat occupancy sensor. The body ECU 4 can detect touch operations on the door sensor as unlocking/locking operation. The door sensor is configured to detect a user action to unlock or lock the door of vehicle Hv. The door sensor may be a touch sensor or a push switch. The start switch is a push switch for the user to turn on or turn off the power supply for traveling purpose.

The actuator 6 may include, for example, a lock motor, or a mechanism for switching the headlights or welcome lamps on and off. The lock motor is a motor used to lock or unlock the door. The welcome lamp is a vehicle-mounted lighting facility that illuminates a road surface or other objects located near the door. The welcome lamp may be equipped to a side mirror, a side sill, a lower end portion of a door panel, or the like. The welcome lamp may be tuned on, for example, when a user holding the mobile device 9 with the digital key application started enters the intermediate area. The intermediate area will be described later.

The body ECU 4 may send an event occurrence notification signal to the DK-ECU 1 in response to detecting a predetermined event that requires detection of the position of mobile device 9, such as an unlocking operation. The DK-ECU 1 may perform control and processing related to the detection of device position in response to the input of event occurrence notification signal from the body ECU 4.

### (BLE Module Configuration and Function)

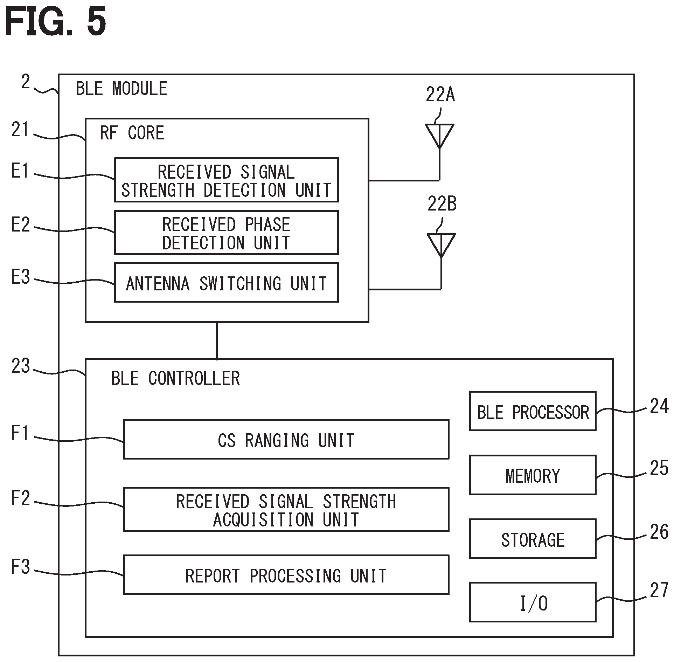

The following will describe an example of configuration and functions of the BLE module 2. As shown in FIG. 5, the BLE module 2 includes an RF core 21, an antenna 22, and a BLE controller 23.

The antenna 22 is an antenna element for transmitting and receiving radio waves in the frequency band used for BLE communication, that is, the 2.4 GHz band. The 2.4 GHz band can be understood as a frequency band that encompasses multiple channels (channel 0 to channel 39) used for BLE communication. The antenna 22 is electrically connected to the RF core 21. The channel may also be referred to as a frequency. Of the multiple channels assigned to the BLE communication, the channel actually used for communication (in other words, the use frequency/channel) changes over time due to frequency hopping or an instruction from the BLE controller.

The RF core 21 is a circuit module that performs signal processing related to the transmission and reception of wireless signals. The RF core 21 may include a modulation circuit, a demodulation circuit, a frequency conversion circuit, an amplifier circuit, a local oscillator, and the like. The RF core 21 also includes input and output terminals for receiving signals from the antenna 22 and outputting signals to the antenna 22.

In the present embodiment, the antenna 22 is implemented by multiple antennas 22A, 22B having different polarization axes, such as horizontal polarization and vertical polarization. These multiple antennas 22A and 22B are provided to achieve polarization diversity, which ensures a sufficient reception level of the CS ranging signal, by switching between multiple antennas 22A and 22B with different polarization axes when performing CS ranging communication. In the following description, when referring to the two antennas 22A and 22B together, they will simply be referred to as antenna 22. For example, when the RF core 21 performs data communication via BLE communication with the mobile device 9, the RF core 21 uses only one of the multiple antennas 22A and 22B. When the RF core 21 performs CS performs ranging communication with the mobile device 9, the antenna to be used by the RF core 21 is switched among the multiple antennas 22A and 22B. The switching of multiple antennas 22A and 22B is performed while the CS ranging signal maintains the same frequency. With this configuration, it is possible to transmit and receive CS ranging signals through multiple signal paths, thereby enabling highly accurate phase measurement of CS ranging signal in the CS ranging communication.

The BLE module 97 of the mobile device 9 may include multiple antennas, or may include a single antenna. For example, when the BLE module 97 of the mobile device 9 has two antennas, the BLE module 2 of the vehicle-mounted system VS and the BLE module 97 of the mobile device 9 can coordinately switch two antennas while the CS ranging signal maintains the same frequency, thereby enabling transmission and reception of the CS ranging signal via four signal paths. When the BLE module 97 of the mobile device 9 includes a single antenna, the CS ranging signal may be transmitted and received through multiple signal paths by simply switching the multiple antennas 22A and 22B of the BLE module 2 included in the vehicle-mounted system VS.

The RF core 21 is connected to the BLE controller 23 in a way that allows for mutual communication. The RF core 21 demodulates the signal received by the antenna 22 and transfers the demodulated signal to the BLE controller 23. The RF core 21 modulates the transmission data input from the BLE controller 23 and transmits the modulated signal as radio waves via the antenna 22. The RF core 21 may be implemented by an IC chip (that is, a transceiver IC).

The RF core 21 is configured to transmit and receive not only modulated signals for data communication, but also CW signal for each channel (frequency) as the CS ranging function. The RF core 21 includes a received signal strength detection unit E1 and a received phase detection unit E2. The received signal strength detection unit E1 is a functional unit that measures the strength of received signal. The received signal strength detection unit E1 outputs data indicating the detected signal strength to the BLE controller 23.

The received phase detection unit E2 is a circuit that detects the received phase, which is the phase angle of the received signal relative to the output signal of the local oscillator, when a CW ranging signal is received. The phase angle of the received signal relative to the output signal of the local oscillator corresponds to the received phase. In other words, the received phase can be understood as the output value of an arctangent that takes the ratio of the Q (Quadrature-Phase) component to the I (In-Phase) component of the received signal as input value. The magnitude of I component corresponds to the strength of in-phase component of the received signal. The magnitude of Q component corresponds to the strength of quadrature component of the received signal. The I component is obtained by multiplying the received signal by the carrier wave output from the local oscillator. The Q component is obtained by multiplying the received signal by a phase shift signal obtained by shifting the phase of signal output from the local oscillator by 90°. The phase shift signal can be obtained by passing the output signal from the local oscillator through a phase shift circuit, which shifts a phase by 90°.

The local oscillator is a circuit that generates a sine wave or a cosine wave at the carrier frequency, and is implemented by, for example, a voltage-controlled oscillator (VCO). The received phase may be determined based on the IQ signal with the frequency reduced to the baseband. The detected information of received phase is used to calculate the device distance, which indicates the distance between the BLE module 2 and the mobile device 9.

The RF core 21 provides the BLE controller 23 with a detected value of the received phase of CW ranging signal by associating the detected value with information indicating the use frequency (for example, channel number). The RF core 21 detects the received phase of CW signal as a step of the ranging process each time the use frequency is switched. That is, the BLE controller 23 is provided with data indicating the received phase for each frequency. In this case, the data showing the received phase for each frequency may include multiple received phases due to the polarization diversity described above.

The BLE controller 23 is implemented by a microcomputer that controls the RF core 21. The BLE controller 23 includes a processor 24, a memory 25, a storage 26, and an input output circuit 27. The BLE controller 23 controls the transfer of data between the BLE module and the DK-ECU 1. Specifically, the BLE controller 23 provides the received data input from the RF core 21 to the DK-ECU 1 sequentially or based on a request from the DK-ECU 1. The BLE controller 23 outputs the transmission data input from the DK-ECU 1 to the RF core 21.

The BLE controller 23 includes a CS ranging unit F1, a received signal strength acquisition unit F2, and a report processing unit F3. Each of the CS ranging unit F1, the received signal strength acquisition unit F2, and the report processing unit F3 may be either a software module or a hardware module. The following descriptions of the CS ranging unit F1, the received signal strength acquisition unit F2, and the report processing unit F3 can be replaced with BLE module 2 or BLE controller 23 as appropriate.

The CS ranging unit F1 is a functional unit that performs the CS ranging. In the present disclosure, the CS ranging refers to the process of generating distance data indicating the device distance based on position related value (received phase), which is a parameter indicating the length of propagation path of the wireless signal from the BLE module 2 to the mobile device 9. The CS ranging includes performing bidirectional or unidirectional communication with the mobile device 9 in order to acquire the received phase, which corresponds to the position related value. The CS ranging may also be referred to as High Accuracy Distance Measurement (HADM) or phase difference distance measurement. In the present disclosure, a series of processes including communication for CS ranging may also be referred to as CS ranging process.

In the present embodiment, the CS ranging unit F1 acquires the received phase for each frequency as part of the CS ranging process, and calculates the device distance based on the received phase. The received phase is the phase difference between the CW ranging signal transmitted by the mobile device 9 and the CW ranging signal received by the BLE module 2. The received phase can be referred to as a transmission received phase difference, a single frequency phase difference, or a first-order phase difference.

The CS ranging unit F1 can acquire the received phase for each frequency, for example, using one-way method. The one-way method assumes that the initial phase of the CW signal transmitted from the mobile device 9 for each frequency is constant, and uses the received phase of the CW signal transmitted from the mobile device 9 directly as the basis for calculating the inter-frequency phase difference. The received phase (in other words, the single frequency phase difference) used as the calculation basis of the inter-frequency phase difference can also be acquired by a passive two-way method, an active two-way method, or the like. The passive two-way method and the active two-way method will be described later as a supplement.

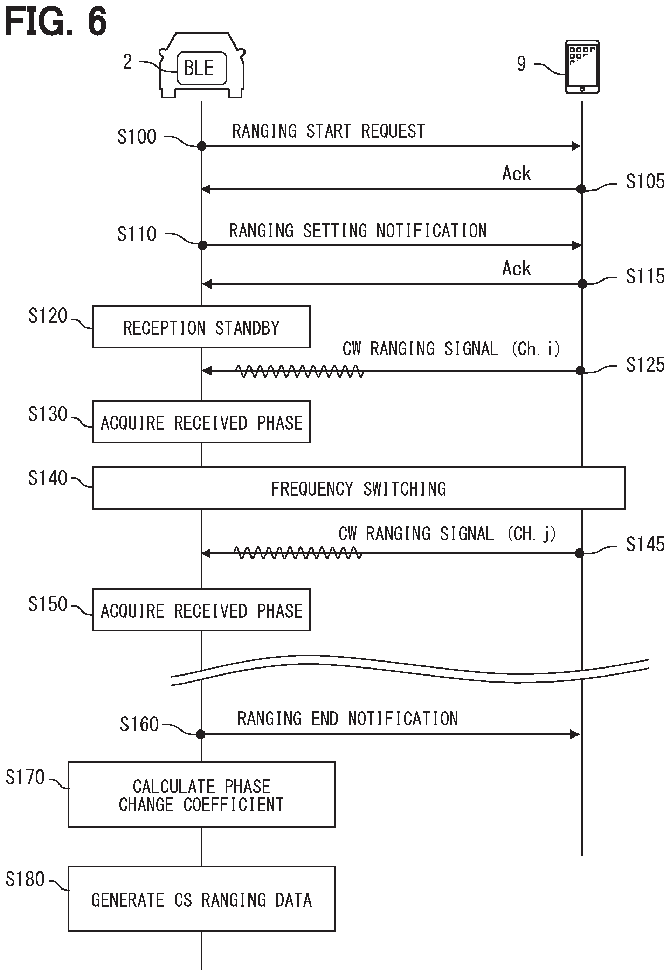

FIG. 6 is a flowchart showing an example of CS ranging processing using one-way method. The CS ranging process includes a preparation phase for adjusting a distance measurement execution condition, a collection phase for collecting a received phase by actually transmitting and receiving the CW ranging signal, and an arithmetic phase for calculating a distance based on the collected received phase for each frequency. In the present disclosure, wireless communication for acquiring a position related value (received phase), such as the transmission and reception of CW ranging signal, is also referred to as CW ranging communication.

In S100, the BLE module 2 transmits a CS ranging start request to the mobile device 9. The CS ranging start request is a BLE signal that requests the mobile device 9 to start the CS ranging. The CS ranging start request may be transmitted using the data channel after the communication connection with the mobile device 9 has been established. In S105, the mobile device 9, in response to having received the CS ranging start request, transmits a positive response signal (called as Ack) back to the BLE module 2.

In S110, BLE module 2 transmits a ranging setting notification signal in response to receiving, from the mobile device 9, the Ack corresponding to the CS ranging start request. The ranging setting notification signal is a signal that indicates the settings for performing CS ranging communication. The settings for performing ranging communication may include the initial phase setting, hopping interval, frequency transition amount, and initial frequency. The setting value of the initial phase is basically set to 0. The hopping interval represents a time period for switching the frequency, in other words, a time period for maintaining one frequency. The hopping interval may be the same as, or different from, the connection interval used for data communication. The frequency transition amount indicates the amount of frequency change during frequency switching. The frequency transition amount may be set the same as, or different from, the hop increment during the data communication. When the frequency transition amount is set the same as the hop increment during the data communication, the frequency transition amount in the CS ranging communication may be determined by the hop increment. The initial frequency is set as the frequency of the first CW ranging signal transmitted in a series of ranging communication. The frequency information may be represented, for example, by a channel number, or may be represented in a different manner without using the channel number.

In S115, the mobile device 9 transmits an Ack back to the BLE module 2 in response to having received the ranging setting notification signal. In response to receiving an Ack from the mobile device 9, in S120, the BLE module 2 transitions to a state where it can receive a signal of the initial frequency, that is, a reception standby state.

In S125, the mobile device 9 starts transmission of CW ranging signal at the initial frequency after a predetermined period has elapsed since transmission of the Ack. The sequential transmission of CW ranging signals can be stopped, for example, after a certain period of time has elapsed since start of the CW ranging signal. The CW transmission period, which is the duration for which the CW ranging signals are successively transmitted, should be set to be shorter than the hopping interval. After receiving the ranging setting notification signal, the mobile device 9 may be configured to start transmission of CW ranging signals under a further condition that a CW ranging transmission request from the BLE module 2 is received.

When the BLE module 2 receives the CW ranging signal from the mobile device 9, in S130, the BLE module 2 detects the received phase and stores the received phase data in the memory 25 together with the corresponding frequency information (for example, channel number). In S140, the BLE module 2 and the mobile device 9 automatically switch the use frequency at the hopping interval agreed upon in advance in S110. The frequency after change can be determined based on the frequency before change and the pre-agreed frequency transition amount.

After the mobile device 9 switches the use frequency, in S145, the mobile device 9 transmits a CW ranging signal having the new use frequency. The BLE module 2 also transitions to a state where the BLE module can receive a signal having new use frequency, by switching the use frequency. In S150, the BLE module 2 observes and acquires the received phase at the frequency after switching.

The BLE module 2 and the mobile device 9 repeat the frequency switching process and the received phase acquisition process described above until they have collected received phases for all frequencies for which received phases should be acquired (for example, all channels available for data communication, that is, 0ch to 36ch). The BLE module 2 and the mobile device 9 may terminate the iterative process when they have collected the received phases for all predetermined required frequencies. The required number here may be the same as the number of data channels, or the required number may be set to larger or smaller than the number of data channels. When the number of frequencies used to collect the received phases increases, the accuracy of distance measurement can be increased, which will be discussed later. When the number of frequencies used to collect the received phases increases, the time required for the ranging communication and the power consumption may increase. The required number may be set to 3, 4, 5, 8, 10, 16, 37, 81, or any other number.

In S160, the BLE module 2 transmits a ranging end notification signal to the mobile device 9 when the BLE module has collected the required number of received phase for each frequency. The ranging end notification signal is a data signal for making a notification that the CW ranging communication is ended. The mobile device 9 switches to a normal data communication mode in response to receiving the ranging end notification signal. The normal data communication mode corresponds to a state in which predetermined data such as audio data can be transmitted and received. Alternatively, transmission and reception of the ranging end notification signal may be properly omitted. The mobile device 9 may be configured to return an Ack to the BLE module 2 in response to receiving of the ranging end notification signal.

In S170, the CS ranging unit F1 calculates a phase change coefficient (α) when collecting of the received phase for each frequency is ended. The phase change coefficient is a parameter indicating a change degree of the received phase according to the change in frequency. The phase change coefficient may also be referred to as a phase change degree, a phase shift amount, or a correlation coefficient between phase and frequency.

The phase shift coefficient is calculated based on the received phases observed at two arbitrary frequencies, for example, a first frequency and a second frequency. Suppose that the frequency difference, which is the difference between the first frequency and the second frequency, is defined as Δf. Suppose that the inter-frequency phase difference, which is the difference between the received phases observed at the first frequency and the received phase observed at the second frequency, is defined as Δφ. The phase change coefficient is defined as α. Then, Δf, Δφ and α satisfy the relationship α = Δφ/Δf. The inter-frequency phase difference (Δφ) is a difference between received phases monitored at two different frequencies. The inter-frequency phase difference (Δφ) can be referred to as a two-frequency phase difference or a second-order phase difference. The inter-frequency phase difference (Δφ) corresponds to a displacement amount of a phase angle due to a change in the use frequency.

The CS ranging unit F1 of the present embodiment calculates a regression line showing the relationship between frequency and received phase based on the received phase for each frequency, and adopts the slope of regression line as the phase change coefficient. This is because the slope of regression line indicates the displacement amount of the received phase with respect to the frequency shift amount. The regression line can be calculated using various methods, such as the least squares method. When the regression line is represented in a form of y = ax + b, then the coefficient a of x corresponds to the slope of regression line. In the above equation, "x" is the variable corresponding to frequency, and "y" is the variable corresponding to the received phase. The regression line may also be referred to as an approximate straight line.

The CS ranging unit F1 may temporarily calculate the first regression line based on all of the monitored received phase data, exclude a value (called outlier) at which a distance from the temporarily calculated first regression line is equal to or greater than a predetermined value, and then recalculate the second regression line. In that case, the CS ranging unit F1 may use the slope of the second regression line as the phase change coefficient. As described above, the phase change coefficient used for ranging may be decided based on a regression line having data excluding outliers as a population. According to this configuration, the calculation accuracy of inter-frequency phase difference, and eventually, the distance measurement accuracy can be improved.

The CS ranging unit F1 may also calculate the inter-frequency phase difference (Δφ), the frequency difference (Δf), and the phase change coefficient for each combination of frequencies at which the received phases can be observed. The CS ranging unit F1 may use the average or median value of the phase change coefficients for respective frequency combinations as the phase change coefficient for distance calculation.

In S180, the CS ranging unit F1 calculates the device distance (D) using the phase change coefficient (α) generated based on received phase information at multiple frequencies. When the device distance is D, then the relationship between the frequency difference Δf and the inter-frequency phase difference (Δφ) satisfies D ∝ C·Δφ/(2π·Δf) = C·α/2π. In the above formula, the parameter "C" represents the propagation speed of radio waves (that is, 3 × 10^8 m/sec). The CS ranging unit F1 calculates the device distance based on the above relationship formula. For example, the CS ranging unit F1 can calculate the device distance using formula 1: D = k·C·α / 2π. The parameter k in formula 1 is a design value, and is set to 1.0 or 0.5. The value of parameter k can be decided by whether the transmission or received phase difference is calculated as a one-way phase change coefficient or as a reciprocating phase change coefficient. The CS ranging unit F1 stores the calculated device distance data in the memory 25.

In another embodiment, the CS ranging unit F1 calculates a provisional value (d) of the device distance using Δf and Δφ for each combination of frequencies, and adopts the average or median of the provisional values as the device distance. In this case, the provisional value (d) of the device distance for a given combination of frequencies can be calculated using d = k·C·Δφ/(2π·Δf), etc.

Of the series of process shown in FIG. 6, the process performed by the BLE module 2 is carried out by the cooperation of the CS ranging unit F1 and the RF core 21. In the above example, the BLE module 2 determines and notifies the execution condition for CS ranging communication, but the present disclosure is not limited to this configuration. The mobile device 9, rather than the BLE module 2, may determine the parameters for performing the ranging communication and transmit the ranging setting notification signal. In addition, the execution subject of each process can be properly interchanged. The above sequence may be performed with the mobile device 9 as a main execution subject (in other words, as a master). The DK-ECU 1 may have a function of calculating the phase change coefficient instead of the CS ranging unit F1. In this case, the CS ranging unit F1 is configured to collect the received phase for each frequency, and transmit the collected data to the DK-ECU 1.

The received signal strength acquisition unit F2 is configured to acquire, from the RF core 21, data indicating the strength of received signal which is transmitted from the mobile device 9 for each frequency. The data indicating the strength of received signal corresponds to the position related value of the BLE communication. The DK-ECU 1 can roughly determine the area and the position of the mobile device 9 based on the received signal strength data transmitted from at least one BLE module 2 (received signal strength acquisition unit F2). While the BLE module 2 is in communication connected state with the mobile device 9, the BLE module periodically communicate data signals with the mobile device 9 for connection check purpose. The received signal strength acquisition unit F2 acquires the received signal strength data at the time when the data signal for connection check purpose is received, and transmits the received signal strength data to the DK-ECU 1. The communication for connection check purpose can be performed at the connection interval. The communication for connection check may be performed every time channel hopping is performed.

The signal used to detect the received signal strength is not limited to the data signal for connection check. The signal used to detect the received signal strength may be a normal data signal or an advertising signal. The signal used to detect the received signal strength may also be a signal used for CS ranging communication. Hereafter, unless otherwise specified, received signal strength refers to the strength of signal transmitted from the mobile device 9.

The report processing unit F3 transmits, to the DK-ECU 1 (main controller 11), the device distance calculated by the CS ranging unit F1 and the received signal strength data obtained by the received signal strength acquisition unit F2. The transmission of various types of data may be performed periodically. The report processing unit F3 may transmit various types of data based on a request from the main controller 11.

### (Interaction between mobile device 9 and vehicle-mounted system VS)

The following will describe an interaction between the mobile device 9 and the vehicle-mounted system VS. Interaction between the mobile device 9 and the vehicle-mounted system VS takes place after the mobile device 9 has been registered (paired) as the owner device in the vehicle-mounted system VS. First, an example of the owner device registration process for registering (pairing) the mobile device 9 as the owner device in the vehicle-mounted system VS will be described.

In the owner device registration process, when the mobile device 9 is a communication terminal such as a smartphone, the user performs biometric authentication or enters a passcode on the mobile device 9. This allows the owner device registration process to confirm that the mobile device 9 is being operated by the authenticated user.

The user uses the mobile device 9 to request the start of owner device registration process to register the owner device in a management server (not shown). In response to this request, the management server will create a password. The generated password is sent to the mobile device 9 and the vehicle-mounted system VS via wireless communication.

In the vehicle-mounted system VS, when the main switch of the vehicle Hv is turned on, a button to start pairing between the owner device and the vehicle-mounted system VS will be displayed, for example, on the multimedia screen located inside the vehicle. The pairing process begins when the user presses the pairing start button displayed on the screen. In this case, the vehicle-mounted system VS may authenticate the user by instructing the user to hold a smart key with a short-range wireless communication function, such as NFC, close to the main switch. Alternatively, the user authentication may be performed by requesting the user to enter a passcode on a multimedia screen to indicate that the user is an authenticated user. The pairing start button may be displayed on the display 95 of the mobile device 9, instead of displaying on the multimedia screen arranged inside the vehicle.

When the pairing start button is operated by the user, an advertising signal is sent from the slave (DK-ECU 1 or mobile device 9) to the central (mobile device 9 or DK-ECU 1) in BLE communication. In BLE communication, the central device receives advertising signals from the slave device. Then, based on the password distributed by the management server, the central device verifies that the communication partner is legitimate and sends a connection request as a response to the advertising signal. In response to the slave device receiving the connection request from the central device, the BLE communication connection is established between the central device and the slave device.

After the BLE communication connection is established between the central device and the slave device, the central device and the slave device generate encryption keys for each other and exchange the encryption keys via the BLE communication. After the validity of exchanged encryption keys is verified, they are stored in a storage medium such as their respective storage devices. After pairing, the data signal of BLE communication is encrypted using the exchanged encryption key. This ensures the security of BLE communication between the DK-ECU 1 and the mobile device 9.

As a part of the owner device registration process, the DK-ECU 1 may determine whether the mobile device 9 supports CS ranging communication. In response to the DK-ECU 1 determining that the mobile device 9 supports CS ranging communication, the DK-ECU 1 may correlate the ID of the mobile device 9 (mobile device ID) to the CS support flag, register and store the correlated data.

Several methods can be adopted to determine whether the mobile device 9 supports CS ranging communication. For example, when the mobile device 9 is registered as an owner device with the vehicle-mounted system VS, the BLE module 97 of the mobile device 9 and the BLE module 2 of the vehicle-mounted system VS exchange various information, including identification information (mobile device ID) of each other. In information exchange, for example, information indicating the wireless communication methods supported by the vehicle-mounted system VS can be transmitted to the mobile device 9, or conversely, information indicating the wireless communication methods supported by the mobile device 9 can be transmitted to the vehicle-mounted system VS. By including information indicating whether the mobile device 9 supports CS ranging communication in the information indicating the wireless communication methods supported by the mobile device, the vehicle-mounted system VS can determine whether the mobile device 9 supports CS ranging communication based on the received information indicating the wireless communication method the mobile device 9 supports.

Alternatively, in the above-described information exchange between the mobile device 9 and the vehicle-mounted system VS can, for example, the vehicle-mounted system VS may transmit an inquiry to the mobile device 9 about the settings related to CS ranging communication. In response to the inquiry from the vehicle-mounted system VS, if the mobile device 9 transmits a reply including setting values about CS ranging communication, the vehicle-mounted system VS can determine that the mobile device 9 supports CS ranging communication. When the mobile device 9 does not reply to the inquiry from the vehicle-mounted system VS, or a response from the mobile device 9 indicates that the mobile device 9 does not support CS ranging communication, the vehicle-mounted system VS can determine that the mobile device 9 does not support CS ranging communication.

The confirmation of whether the mobile device 9 supports CS ranging communication may be performed each time the DK-ECU 1 and the mobile device 9 initiate the BLE communication, rather than when the mobile device 9 is registered as the owner device.

The management server is notified that the mobile device 9 has been registered as the owner device with respect to the vehicle-mounted system VS of the vehicle Hv, and the owner device registration process is completed. After the owner device registration process is completed, the slave device (DK-ECU 1 or mobile device9) in BLE communication starts transmission of an advertising signal. In BLE communication, the central device (mobile device 9 or DK-ECU 1) starts scanning for the corresponding advertising signal. In the following description, suppose that the mobile device 9 is a slave device in BLE communication as an example.

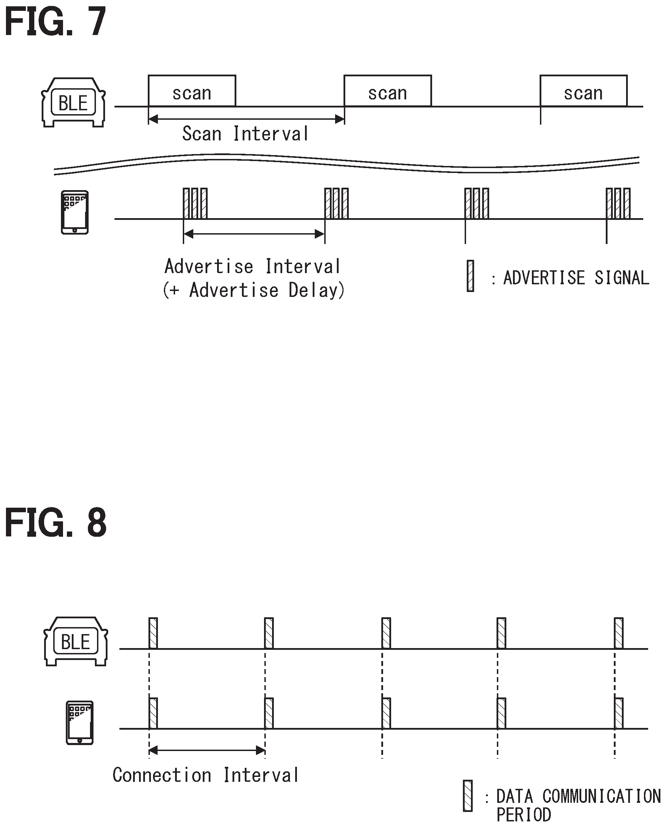

When the mobile device 9 and the vehicle-mounted system VS have not yet established a communication connection, as shown in FIG. 7, the mobile device 9 transmits an advertising signal at a predetermined interval, which is a sum of a predetermined advertising interval and a random duration (referred to as advertising delay). The BLE module 2 of the vehicle-mounted system VS enters a reception standby state at a predetermined scan interval and scans for advertising signal from the mobile device 9. The size of scan window corresponding to the length of duration for maintaining the reception standby state may be appropriately set.

The length of the scan interval and the advertising interval can also be set to various values. The various interval values may be set to allow for a quick connection in response to a user approaching toward the vehicle Hv. The advertising interval may be set to a value between 20 milliseconds and 400 milliseconds, such as 37.5 milliseconds, 50 milliseconds, 80 milliseconds, or 100 milliseconds. The advertising interval may also be set to a value exceeding 400 milliseconds, within the limits of compliance with the BLE standard. The advertising interval may be set to be shorter than the scan interval.

In response to the advertising signal from the mobile device 9, the vehicle-mounted system VS transmits a connection request, thereby establishing a communication connection between the mobile device 9 and the vehicle-mounted system VS. After a communication connection is established between the mobile device 9 and the vehicle-mounted system VS, the BLE module 97 of the mobile device 9 and the BLE module 2 of the vehicle-mounted system VS periodically communicate data via BLE communication at a predetermined connection interval, as shown in FIG. 8. The communication content may be various content such as communication connection check. The connection interval may be set to a value from 7.5 milliseconds to 200 milliseconds, such as 30 milliseconds or 40 milliseconds. The connection interval may also be set to a value exceeding 200 milliseconds within a range conforming to the BLE standard.

After the BLE communication connection is established between the mobile device 9 and the vehicle-mounted system VS, the DK-ECU 1 of vehicle-mounted system VS performs CS ranging communication with the mobile device 9. The CS ranging communication may be initiated when the received signal strength of the BLE signal becomes equal to or larger than a predetermined strength threshold, or when the distance between the positions detected by GPS receivers falls equal to or shorter than a distance threshold. When any of the above-described conditions for starting CS ranging communication is satisfied, the DK-ECU 1 can transmit a request to start CS ranging to the BLE module 2.

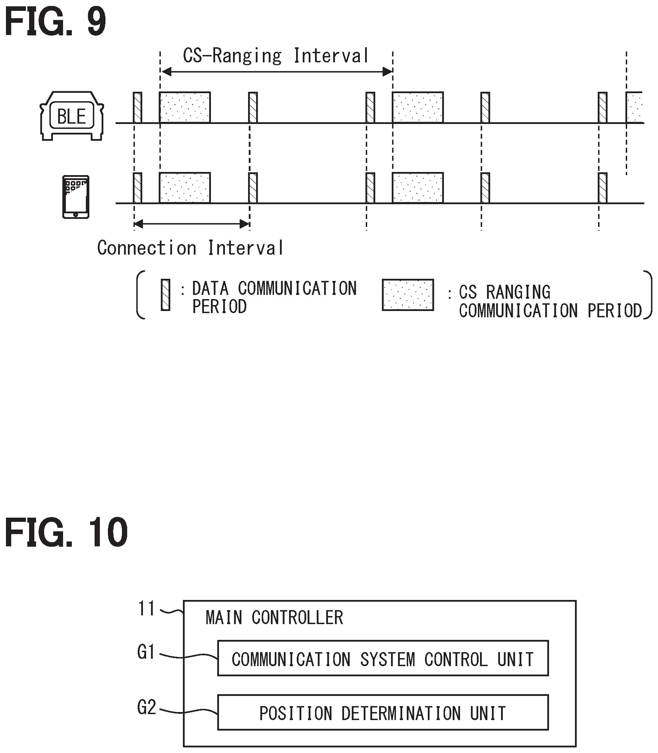

FIG. 9 shows an interaction between the mobile device 9 and the vehicle-mounted system VS when they perform CS ranging communication. The CS ranging interval, which is the interval at which the BLE module 2 performs CS ranging communication, can be set to, for example, twice or three times the connection interval. By setting the CS ranging interval longer than the periodic data communication execution interval, power consumption can be reduced. However, the CS ranging interval may be set the same as the connection interval. Note that CS-Ranging Interval shown in FIG. 9 indicates the CS ranging interval. Multiple CW signals can be communicated on different frequencies in a single CS ranging communication. A single CS ranging communication may be configured to involve communication of a single CW signal on a single frequency. The duration of a single CS ranging communication can be adjusted by factors such as the length of CW signal.

When the mobile device 9 and the vehicle-mounted system VS perform data communication and CS ranging communication via respective BLE modules 2, 97, as shown in FIG. 9, the DK-ECU 1 can perform ranging process based on the received signal strength of the signal for data communication, and also perform the CS ranging by CS ranging communication. When the mobile device 9 does not support CS ranging communication, for example, as shown in FIG. 8, normal data communication is performed between the BLE module 2 and the mobile device 9, and the ranging is performed using the received signal strength of signal for that data communication, and the received signal strength of the data communication is used for ranging according to received signal strength. In this case, the DK-ECU 1 can perform received signal strength ranging using the received signal strength of data communication.

The CS ranging communication may be terminated, for example, when the power of the mobile device 9 is turned off and the BLE communication is disconnected, or when the received signal strength of BLE signal decreases equal to or lower than a predetermined strength threshold. The strength threshold used when terminating CS ranging communication may be the same as or different from the strength threshold used to initiate the CS ranging communication. The CS ranging communication may be terminated when no action is taken on the vehicle Hv for a predetermined period of time after the CS ranging communication has started. The CS ranging communication may be terminated when the user gets into the vehicle Hv and turns on the start switch of the vehicle. When any of the above-mentioned termination conditions for CS ranging communication is satisfied, the DK-ECU 1 can send, to the BLE module 2, a request to terminate the CS ranging.

When the CS ranging communication is terminated in response to the user turning on the start switch, the CS ranging communication may be started again in response to the opening and closing of the door of vehicle Hv. This enables detection of the position for the mobile device 9 via CS ranging communication, for example, when the mobile device 9 is taken outside the vehicle while the vehicle Hv is temporarily stopped with the start switch remaining on state.

### (Functions of Main Controller 11)

As shown in FIG. 10, the main controller 11 of the DK-ECU 1 includes a communication system control unit G1 and a position determination unit G2, as functional blocks. The communication system control unit G1 is a software or hardware module that controls the operation of the BLE module 2. For example, the communication system control unit G1 performs communication connection management process to limit the number of mobile devices 9 with which the communication connection is maintained at the same time to a predetermined maximum connection number. The communication control unit G1 uses the BLE module 2 to perform CS ranging process.

The position determination unit G2 detects the position of the mobile device 9 by determining the device position relative to the vehicle Hv based on the CS ranging result and/or the received signal strength ranging result. The position of the mobile device can be represented by multiple areas/zones predefined in the vehicle Hv, such as the engine start area ESA defined inside the vehicle, the entry area (nearby area) defined outside the vehicle, and the intermediate area and remote area that are defined outside the vehicle according to the distance from the vehicle.

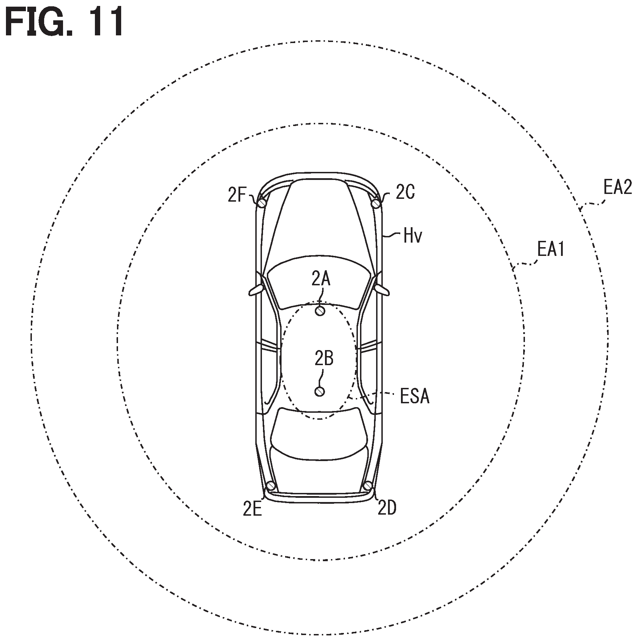

The entry area defined outside the vehicle refers to a region where a distance from the vehicle Hv is equal to or less than a nearby determination value EA1, which may be set as 1.0 meter, 1.5 meters, 2 meters, or 5 meters, as shown in FIG. 11. The entry area is an area where the doors and trunk of the vehicle Hv can be unlocked/locked in response to a user operation detected by the action sensor 5. Unlocking the doors of vehicle Hv may include unlocking of the door for which the unlocking operation is performed or unlocking of doors including the door for which the unlocking operation is not performed. When locking the doors of vehicle Hv, if the user holding the mobile device 9 performs the locking operation on one of the doors, all of the doors and the trunk may be configured to be locked.

The remote area refers to a region where the distance from the vehicle Hv exceeds a predetermined remote determination value EA2. The remote determination value is a parameter used to determine that the mobile device 9 is not located in the vicinity of the vehicle Hv. The remote determination value may be set to, for example, 10 meters, 12 meters, or 15 meters. In a remote area, the user can start the digital key application on the mobile device 9 to perform operation, such as locking/unlocking of the doors and trunk of the vehicle Hv, sounding a buzzer, and displaying the vehicle status.

The intermediate area refers to an area that is intermediate between the remote area and the entry area. The intermediate area may be referred to as welcome area that performs predetermined welcome control such as turning on vehicle exterior lighting in response to the mobile device 9 entering the intermediate area. The intermediate area may be an area where predetermined control, such as tracking of device position for the mobile device 9 or shortening of position determination cycle is executed/started while the predetermined control is not executed when the mobile device 9 is present in the remote area. The intermediate area may also be referred to as a standby area, a peripheral area, or the like. The intermediate area may be an area where user can remotely park/retrieve the vehicle Hv.

The aforementioned entry area, the intermediate area, and the remote area are subdivisions of the area outside the vehicle. As shown in FIG. 11, the position determination unit G2 may determine whether the mobile device 9 is located inside the vehicle, such as the engine start area ESA. The engine start area ESA enables turn-on or turn-off of the main switch (traveling purpose power switch) of the vehicle Hv.

As described above, the position determination unit G2 of the present embodiment determines the stay area of the mobile device, that is, the area where the mobile device 9 is located. In another embodiment, the position determination unit G2 may calculate the device position coordinates instead of/in addition to determination of the stay area. The device position coordinates refer to the position coordinates of the mobile device 9 in a two-dimensional/three-dimensional coordinate system with a predetermined portion of the vehicle Hv as the reference. The calculation of device position coordinates can be performed using a method similar to three-point positioning or multi-point positioning in the technical field of GPS and position estimation.

The main controller 11 transmits device position data, which is data indicating the determined device position of mobile device, to a designated ECU such as the body ECU 4. The main controller 11 may periodically update the device position data. The main controller 11 may generate and update the device position data in response to an occurrence of predetermined event.

### (Communication connection management process)

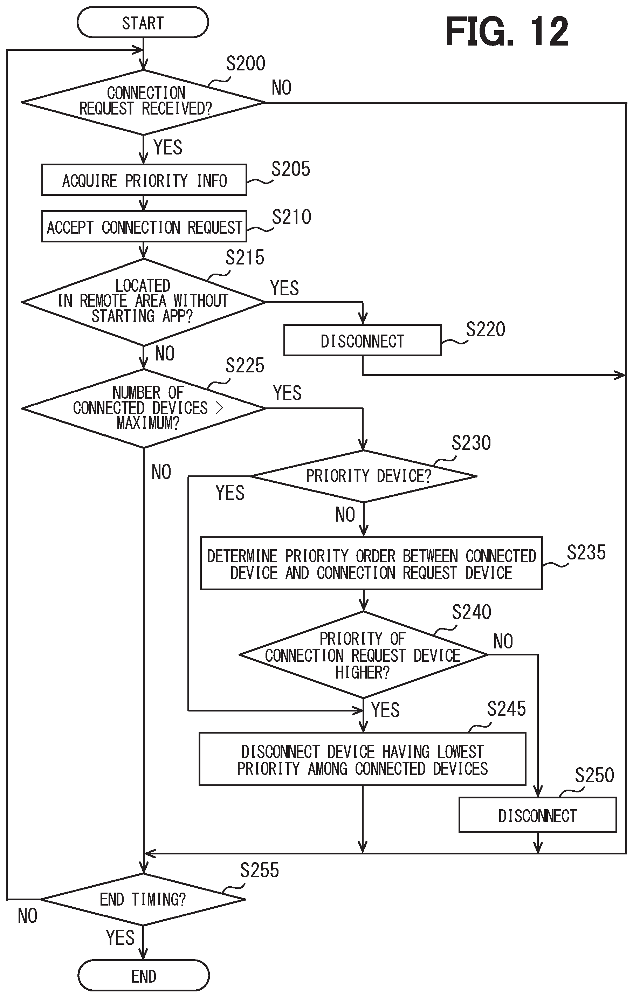

The following will describe the communication connection management process performed in the vehicle-mounted system VS of the vehicle electronic key system according to the present embodiment with reference to the flowchart in FIG. 12. The communication connection management process limits the number of mobile devices 9 with which the communication connection is being maintained at the same time to a predetermined maximum connection number. The process shown in the flowchart of FIG. 12 is repeatedly executed at each scan interval corresponding to a duration of scan window, when the DK-ECU 1 functions as the master in the BLE communication with the mobile device 9.

In S200 of the flowchart in FIG. 12, the DK-ECU 1 of the vehicle-mounted system VS determines whether an advertising signal, which corresponds to a connection request and is transmitted from the mobile device 9, is received. When the DK-ECU 1 functions as a slave, the DK-ECU 1 may determine whether a connection request is replied from the mobile device 9 as a response to the advertising signal transmitted from the DK-ECU 1. As mentioned above, the advertising signal and/or connection request includes information indicating the transmission source and information indicating whether the digital key application has been started. When the DK-ECU 1 determines that an advertising signal is received or a connection request is received, the process proceeds to S205. When the DK-ECU 1 determines that an advertising signal or a connection request has not been received, the process proceeds to S250.

In S205, the DK-ECU 1 acquires, as priority information (priority determination information), information indicating the transmission source and information indicating whether the digital key application has been started. The information indicating the transmission source and information indicating whether the digital key application has been started are included in the received advertising signal or connection request. The process in S205 corresponds to an acquisition unit in the present disclosure. In the present embodiment, the priority information may be acquired in the BLE data communication which is performed after the BLE communication connection is established in S210. The details will be described later.

In S210, the DK-ECU 1 accepts the connection request from the mobile device 9 by sending a response signal (connection request) to the mobile device 9 that has sent the advertising signal. Alternatively, the DK-ECU 1 may accept the connection request from the mobile device 9 in response to receiving the connection request, which is transmitted from the mobile device 9. In this manner, the BLE communication connection is established between the DK-ECU 1 and the mobile device 9. Thus, the DK-ECU 1 can perform BLECS ranging communication with the mobile device 9, thereby determining the device distance to the mobile device 9 with high accuracy. As a result, it becomes possible to determine the distance to the mobile device 9 and the area where the mobile device 9 is positioned, with high accuracy. After accepting the connection request, the DK-ECU 1 performs BLECS communication with the mobile device 9.

In the following S215, the DK-ECU 1 determines whether the digital key application of the mobile device is not yet started and whether the distance to the mobile device 9, as determined by BLECS ranging communication, corresponds to a remote area, or whether the specified position of the mobile device 9 belongs to a remote area.

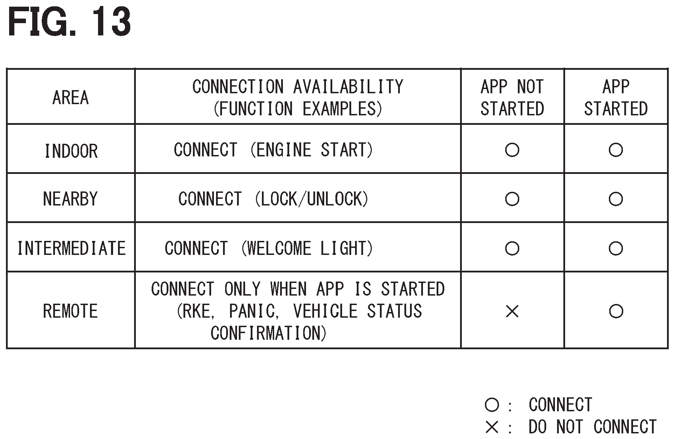

In the present embodiment, as shown in FIG. 13, when the position of the mobile device 9 is in an indoor area, a nearby area, or an intermediate area, the mobile device 9 is set as a target for establishing communication connection, regardless of whether the digital key application has been started or not, under a condition that the number of connected mobile devices does not exceed the maximum connection number. This is because users of mobile devices 9 located in an intermediate area or an area closer to the vehicle Hv than the intermediate area are more likely to intend to access or use the vehicle Hv. On the other hand, when the mobile device 9 is located in a remote area, the mobile device 9 is set as the target for establishing communication connection under a condition that the digital key application has been started. This is because, when the mobile device 9 is located in a remote area without starting the digital key application, it is unclear whether the user holding the mobile device 9 intends to access or use the vehicle Hv. When the user is located in a remote area but the digital key application of the mobile device 9 has been started, it is considered that the user of the mobile device 9 may intend to access or use the vehicle Hv. Therefore, by excluding mobile devices 9 located in remote area without starting the digital key application from the communication connection target, it is possible to prevent unnecessary communication connections between the vehicle and the mobile devices 9. The communication connection availability shown in FIG. 13 also applies to mobile device 9, such as the owner device, which should be prioritized in establishing of communication connection. When the number of mobile devices 9 that become targets of communication connection at the same time exceeds the maximum connection number that is set in advance, the mobile devices 9 allowed to establish the communication connection and the mobile devices 9 to be disconnected from the communication connection are determined by a process described later.

In S215, when the mobile device 9 is determined to be in a remote area without starting the digital key application, the DK-ECU 1 proceeds to S220 and disconnects the communication connection with the mobile device 9 with which the communication connection was previously established.

In S215, when the DK-ECU 1 determines that the digital key application of the mobile device 9 is started and/or the mobile device 9 is located in an intermediate are or a nearby area rather than a remote area, the DK-ECU 1 proceeds to S225. In S225, the DK-ECU 1 determines whether the number of mobile devices 9 with which the communication connection being maintained at the same time is greater than the maximum connection number. For example, in S200, when the number of mobile devices 9 that are currently maintaining the communication connection has reached the maximum connection number before receiving a connection request from a new device 9, then establishing a communication connection with the new device 9 will cause the number of mobile devices 9 currently maintaining the communication connection to exceed the maximum connection number. When the DK-ECU 1 determines that the number of mobile devices 9 that are currently maintaining the communication connection exceeds the maximum connection number, the process proceeds to S230. When the DK-ECU 1 determines that the number of mobile devices 9 that are currently maintaining the communication connection equal to or less than the maximum connection number, the process proceeds to S255.

In S230, the DK-ECU 1 determines whether the mobile device 9 with which the communication connection is newly established is a priority device that should be given a priority for communication. The DK-ECU 1 may determine whether the mobile device 9 with which the communication connection is newly established is a priority device based on priority information obtained from the mobile device 9 through communication with the mobile device 9. The priority information includes information for determining whether the mobile device 9 is the owner device, or information for determining whether the mobile device 9 is a friend device that is authorized by the user who owns the owner device for accessing or using the vehicle Hv. The information for determining the friend device 9 includes information indicating whether the friend device is the first time performs the communication with the DK-ECU 1 via the BLE module 2.

For example, the device ID can be used as information to determine whether the mobile device corresponding to the device ID is the owner device. The device ID of the owner device is registered in the DK-ECU 1 in advance. Thus, the DK-ECU 1 can determine the owner device based on the device ID. In the present embodiment, when the mobile device 9 is the owner device, it is assumed that the mobile device 9 has the priority information that should be prioritized for the communication connection over other mobile devices. As the information for determining whether the mobile device is a friend device communicating for the first time, information such as the device ID and the assignment information (for example, a part of the key code) assigned by the owner device to the friend device can be used. Once the DK-ECU 1 establishes a communication connection with the mobile device 9, the DK-ECU 1 registers the device ID of the mobile device 9 as a device with which it has previously established a communication connection. Therefore, the DK-ECU 1 can determine, based on the device ID, whether the mobile device 9 is the first time establishing the communication connection with the DK-ECU 1. Based on the assignment information, the friend device for which access or use of the vehicle Hv is authorized can be determined.

A friend device can obtain and store, for example, assignment information (for example, an attestation package including IRK) indicating the mobile device is a friend device that has been previously authorized for access right and usage right to the vehicle Hv by the owner device via the management server. Therefore, when the mobile device 9, which tries to establish the communication connection for the first time, approaches the vehicle Hv, it becomes possible to establish the communication connection between the vehicle-mounted system VS and the mobile device 9 by using the stored assignment information to sending an advertising signal and replying a connection request back.

Once the BLE communication connection is established between the friend device and the vehicle-mounted system VS, the vehicle-mounted system VS confirms the attestation package held by the friend device. This allows the vehicle-mounted system VS to confirm that the device with which it has established a communication connection is a friend device. Then, similar to the registration of owner device, the friend device and the vehicle-mounted system VS generate encryption keys for each other and exchange them via BLE communication. The vehicle-mounted system VS correlates the device ID and the encryption key of the friend device, and then registers the corresponding device as a friend device. In this case, the vehicle-mounted system VS may determine whether the friend device supports CS ranging communication and register the result of determination (for example, a CS support flag) in association with the device ID.

Alternatively, the DK-ECU 1 can, in response to an instruction from the user of owner device, perform a V2X communication with a management server. The device ID, authorized privileges, and usage period of friend device may be registered in the management server in advance. The DK-ECU 1 obtains the registration information from the management server by performing a V2X communication. Based on the obtained registration information, the DK-ECU 1 can then determine whether the device with which it has established a communication connection is a friend device.

In the present embodiment, when the mobile device 9 is the friend device with which the communication connection is established for the first time, it is assumed that the mobile device 9 has the priority information that should be prioritized for the communication connection over other mobile devices.

The reason for designating the owner device as the priority device is to ensure the convenience of the user of owner device by allowing the owner device to establish a communication connection with priority over other mobile devices 9 when the user of owner device approaches the vehicle Hv with the intention of using the vehicle Hv. The reason for prioritizing the friend device with which the communication connection is established for the first time is that when the friend device, which is authorized to access or use the vehicle Hv, is connected to the vehicle Hv for the first time, the user holding the friend device (family members, friends, service providers, valet parking attendants, or the like) is considered likely to access or use the vehicle Hv.

When the DK-ECU 1 determines, in S230, that the mobile device 9, with which the communication connection is newly established, is a priority device for which communication should be prioritized, the process proceeds to S245. When the DK-ECU 1 determines that the mobile device 9, with which the communication connection is newly established, is not the priority device, the process proceeds to S235.

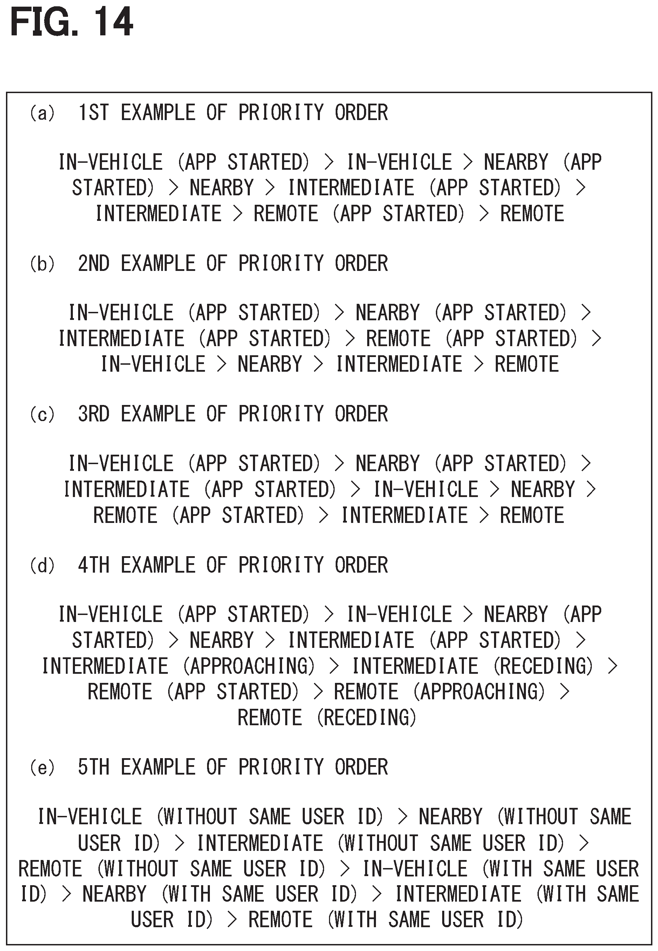

In S235, the DK-ECU 1 determines the priority between the mobile device 9, which is currently maintaining the communication connection, and the mobile device 9, which has accepted a connection request and newly established a communication connection. Some examples of how to determine the two priorities will be explained with reference to FIG. 14.

FIG. 14 shows in (a) a first example of priority determination. In the first example, area is used as the main factor for priority determination. When the mobile device 9 is positioned in an area closer to the vehicle Hv, the mobile device is assigned with a higher priority. In the first example, whether the digital key application has been started or not is used as a subsidiary factor for priority determination. Within the same area, the priority of a mobile device 9 with the digital key application started is set to be higher than the priority of a mobile device 9 without the digital key application started. When there are multiple mobile devices 9 with the digital key applications started within the same area, or multiple mobile devices 9 without the digital key application started, a priority order may be determined for these multiple mobile devices 9, for example, based on the distance from the mobile device to the vehicle Hv or to the driver seat of the vehicle Hv. This is also applied in the example described below.

FIG. 14 shows in (b) a second example of priority determination. In the second example, whether the digital key application has been started or not is used as a main factor for priority determination. The priority of a mobile device 9 with the digital key application started is set to be higher than the priority of a mobile device 9 without the digital key application started. In the second example, area is used as the subsidiary factor for priority determination. Among the mobile devices 9 with the digital key application started, a higher priority is set to the mobile device 9 when the mobile device 9 is positioned in a closer area to the vehicle Hv. Similarly, among the mobile devices 9 without the digital key application started, a higher priority is set to the mobile device 9 when the mobile device 9 is positioned in a closer area to the vehicle Hv.

FIG. 14 shows in (c) a third example of priority determination. In the third example, the priority order of the mobile devices 9 is determined by properly combining the priority determination according to whether the digital key application is started and the priority determination according to area, using the combination as main factor of priority determination. For example, in the example shown in (c) of FIG. 14, the priorities of mobile devices 9 with the digital key applications started and located in an area from the in-vehicle area to the intermediate area are set to be higher than the priority of a mobile device 9 without the digital key application started and located in the in-vehicle area. The priorities of mobile devices 9 without the digital key applications started and located in the in-vehicle area and nearby area are set to be higher than the priority of a mobile device 9 with the digital key application started and located in the remote area. The priorities of mobile devices 9 without the digital key application started and located in the intermediate area and remote area are set to be lower than the priority of mobile device 9 with the digital key application started and located in the remote area. However, the third example is merely one example, and it is possible to properly combine, in a different way from the example shown in the third example, the priority determination according to whether the digital key application is started and the priority determination according to the located area.

FIG. 14 shows in (d) a fourth example of priority determination. The fourth example is based on the first example, and sets the priorities of mobile devices 9 without the digital key applications started in the intermediate area and remote area by considering whether the mobile device 9 is approaching toward the vehicle Hv or receding from the vehicle Hv. Specifically, for mobile devices 9 in the intermediate and remote areas without the digital key applications started, the priority of approaching mobile device 9 is set to be higher than the priority of receding mobile device 9. Whether the mobile device 9 is approaching toward or receding from the vehicle Hv can be determined from the detected moving trajectory of each mobile device 9 and the moving direction predicted based on the position of each mobile device 9.

The fourth example is only an example. In another example, even in a nearby area, the priority of each mobile device 9 may be set according to whether the mobile device is approaching toward or receding from the vehicle Hv. Alternatively, for the mobile devices 9 with the digital key applications started, whether the mobile device is approaching toward or moving away from the vehicle within each corresponding area can be determined, and then the priority of each mobile device 9 can be set according to the determination result.

FIG. 14 shows in (e) a fifth example of priority determination. In the fifth example, the presence or absence of the same user ID is used as the main factor of priority determining. The priority of mobile device 9 without the same user ID is set to be higher than the priority of mobile device 9 with the same user ID. A mobile device 9 without the same user ID indicates a mobile device 9 that shares the user ID with another mobile device and communication connection has not been established between the DK-ECU 1 and another mobile device 9. A mobile device 9 with the same user ID indicates a mobile device 9 that shares the user iD with another mobile device 9 and communication connection has been established between the DK-ECU 1 and another mobile device. In the fifth example, area is used as the subsidiary factor for priority determination. Among the mobile devices 9 without the same user ID, a higher priority is set to the mobile device 9 when the mobile device 9 is positioned in a closer area to the vehicle Hv. Similarly, among the mobile devices 9 with the same user ID, a higher priority is set to the mobile device 9 when the mobile device 9 is positioned in a closer area to the vehicle Hv.

The user ID is preset identifier for each user, and is assigned by the management server when each user registers own mobile device 9 in the management server. When the same user registers multiple mobile devices 9 (smartphones, wearable devices, or the like), the management server assigns the same user ID to all of the mobile devices 9 registered by the same user. Therefore, the user ID indicates the owner of one or more mobile devices 9. When registering the mobile device 9 as the owner device or the friend device, the DK-ECU 1 can obtain the user ID from the management server, correlates the user ID with the device ID, and save the correlated information. Alternatively, when the mobile device 9 already has the user ID, the DK-ECU 1 may obtain the user ID by performing a communication with the mobile device 9.

As mentioned above, the user ID is a predetermined identifier for each user. Therefore, based on the user ID, the number of mobile devices 9 connected to the DK-ECU 1 can be confirmed for each user. When one of the multiple mobile devices 9 owned by the same user has been connected to the DK-ECU 1, the user can use the connected mobile device 9 to access or use the vehicle Hv. Therefore, there is little need for one user to connect two or more mobile devices 9 to the DK-ECU 1 for communication purpose.

For the above-described reason, in the fifth example, the priorities of mobile devices without the same user ID are set to be higher than the priorities of mobile devices 9 with the same user ID. The confirmation of the number of mobile devices 9 with the same user ID connected to the DK-ECU 1 may be performed when the number of mobile devices 9 connected to the DK-ECU 1 exceeds the maximum connection number. When the number of mobile devices 9 connected to the DK-ECU 1 is equal to or less than maximum connection number, multiple mobile devices 9 with the same user ID can be connected to the DK-ECU 1. The method for determining priority based on the presence or absence of same user ID, as shown in the fifth example, may be implemented in any combination with the first to fourth examples described above.

Several use cases related to the fifth example are described below. The first use case is when a mobile device 9 that has newly established the communication connection is a priority device (for example, the owner device or the friend device communicating for the first time), and this new connection will cause the number of connection devices exceeds the maximum connection number In this case, among the mobile devices 9 that have already established the communication connection, priority may be determined according to the rule shown in (e) of FIG. 14.

The second use case is when a mobile device 9 that has newly established the communication connection is not a priority device (for example, the friend device that has been connected in the past), and this new connection exceeds the maximum number of connections allowed. In this case, among the mobile device 9 that has newly established the communication connection and the mobile device 9 that has already established the communication connection, priority may be determined according to the rule shown in (e) of FIG. 14.

For example, in the second use case, suppose that the mobile device 9 that has newly established the communication connection is a mobile device 9 without the same user ID, and the mobile devices 9 already established the communication connection include a mobile device 9 with the same user ID. In this case, the priority of mobile device 9 that has newly established the communication connection is determined to have a higher priority than the already connected mobile device 9 with the same user ID. Suppose that the mobile device 9 that has newly established the communication connection is a mobile device 9 without the same user ID, and the mobile devices 9 already established the communication connection are also mobile devices 9 without the same user ID. In this case, the priority is determined based on the distance from the vehicle Hv to each mobile device 9 or the area in which each mobile device 9 is located. Even if the mobile device 9 that has newly established the communication connection is a mobile device 9 with the same user ID, priority may be determined according to the rule shown in (e) of FIG. 14.

When a mobile device 9 that has newly established communication connection and the mobile device 9 with the lowest priority among the already connected mobile devices 9 belong to the same area and have the same priority, it is not necessary to switch the communication connection (that is, disconnect the existing communication connection). This can prevent increase in the processing load caused by frequent switching of communication connection.

In S240, the DK-ECU 1 determines, based on the priority of the mobile device 9 that is currently maintaining the communication connection determined in S235 and the priority of the mobile device 9 that has newly established the communication connection in response to acceptance of a connection request, whether the priority of the mobile device 9 that has newly established the communication connection is higher than at least one of the mobile devices 9 that are currently maintaining the communication connection. When the priority of the mobile device 9 that has newly established the communication connection is higher than the priority of at least one of the mobile devices 9 that are currently maintaining the communication connection, the DK-ECU 1 proceeds to S245. When the priority of the mobile device 9 that has newly established the communication connection is not higher than the priority of at least one of the mobile devices 9 that are currently maintaining the communication connection, that is, the priority of the mobile device 9 that has newly established the communication connection has the lowest priority, the DK-ECU 1 proceeds to S250.

In S245, the DK-ECU 1 disconnects the communication connection with the mobile device 9 having the lowest priority among the mobile devices 9 that are currently connected. In response to determining, in S225, that the mobile device 9 that has newly established a communication connection is a priority device, the process may skip S235 and S240, and execute S245 directly. The mobile device 9 that has newly established a communication connection is a priority device, the communication connection of the mobile device 9 that has newly established a communication connection is secured. Instead, the mobile device 9 subject to the disconnection of communication connection will be selected from the mobile devices 9 that are currently maintaining the communication connection. Therefore, for the mobile device 9 corresponding to the priority device, a higher priority is assigned over other mobile devices 9 for enabling the communication connection with the vehicle Hv (DK-ECU 1). In S250, the DK-ECU 1 disconnects the communication connection of the mobile device 9 that has newly established the communication connection. By the process executed in S245 or S250, the number of mobile devices 9 that are maintaining the communication connection can be limited to the maximum connection number. Thus, the process executed in S210, S225, S227, S230, S234, S235, S240, S245, S250 corresponds to the communication connection control unit of the present disclosure.

In S210, even though performing establishing of communication connection with a new device 9 that has newly established communication connection may temporarily cause the number of mobile devices 9 that are maintaining the communication connection to exceed the maximum connection number. However, since one of the communication connections is immediately disconnected in S220, S245, or S250 as described above, the period during which the maximum connection number is exceeded is only a very short time of period. Therefore, it is possible to sufficiently suppress delays in communication between the vehicle Hv and each mobile device 9.

In S255, the DK-ECU 1 determines whether the scan window period for scanning the advertising signal has ended. In response to determining the end timing, the DK-ECU 1 ends the process shown in the flowchart of FIG. 12. In response to determining not the end timing, the DK-ECU 1 returns S200 and repeats the process as described above.

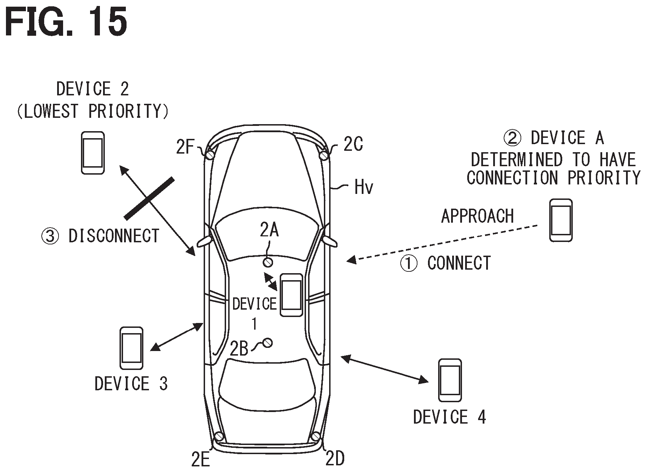

An example of operation using the process shown in the flowchart of FIG. 12 will be explained with reference to FIG. 15. In the example shown in FIG. 15, the maximum connection number is set to 4. The maximum connection number is not limited to four, and may be set to five or more.

In the example shown in FIG. 15, the vehicle Hv is communicating with four devices, which include a first device located inside the vehicle and a second device to a fourth device located outside the vehicle. The number of devices communicating simultaneously with the vehicle Hv at the current time is the maximum connection number. Suppose that a user holding a device A approaches the vehicle Hv at a certain time point. In this case, the vehicle Hv (DK-ECU 1) establishes a communication connection with the device A in response to receiving a connection request from the device A. This enables BLECS ranging communication with the device A, thereby enabling highly accurate position detection for device A. The positions of the first device to fourth device, which are currently maintaining the communication connection, are also determined with high precisions using BLECS ranging communications.

The DK-ECU 1 performs a priority connection determination for the device A, which has newly established the communication connection. As described above, priority connection determination is performed when device A enters the remote with the digital key application started or when device A enters the intermediate area without the digital key application started. The priority connection determination includes determining whether device A is a priority device based on the priority information of device A, and determining whether device A has a higher priority than the first to fourth devices by comparing the priority of device A with priorities of the first to fourth devices that are currently maintaining the communication connection. When the DK-ECU 1 determines in priority connection determination that the communication connection of device A should be prioritized, the DK-ECU 1 disconnects the communication connection with the device having the lowest priority among the first to fourth devices that are currently maintaining the communication connection (in the example of FIG. 15, the second device having the lowest priority).

### (Second Embodiment)

The following will describe a vehicle electronic key system to which a communication connection management system, a communication connection management method, and a computer is applied according to a second embodiment of the present disclosure. The vehicle electronic key system according to the present embodiment is configured in the same manner as the vehicle electronic key system according to the first embodiment described above. Therefore, a description of the configuration will be omitted.

In the first embodiment described above, when a connection request (advertising signal) is received from a new device 9, the DK-ECU 1 establishes a communication connection with the new device 9 and enables high-precision position detection of the new device 9 using BLECS ranging communication.

Although BLECS ranging offers high ranging accuracy, BLECS ranging takes relatively longer duration to measure the distance to the mobile device 9 and detect the position of mobile device 9, compared to receiving signal strength ranging using BLE communication. Although the difference in duration is a very short time period, it may cause the number of mobile devices 9 communicating with the DK-ECU 1 to exceed the maximum connection number.

In the present embodiment, in order to shorten the time required to measure the distance to the mobile device 9 and detect position of the mobile device 9, and to suppress the communication delay of the mobile device 9 while the communication connection is maintained, when a connection request (advertising signal) is received from a new device 9, priority information of the new device 9 is acquired, and a received signal strength ranging is performed based on the received signal strength of the received connection request. Then, based on the acquired priority information and the distance to the mobile device 9 obtained from the received signal strength ranging together with the area in which the mobile device 9 is located, a decision is made as to whether to establish a communication connection with the new device. Therefore, according to the present embodiment, although the area determination accuracy based on the distance and position of the mobile device 9 is slightly decreased, it becomes possible to determine whether to establish a communication connection with a new device 9 in a shorter amount of time. According to the present embodiment, it is possible to suppress delays and other adverse effects on communication with the mobile device 9 during communication connection. According to the present embodiment, even though the mobile device 9 does not support BLECS ranging communication and only supports BLE communication, it is possible to determine whether to establish a communication connection after considering priority information and the priority order of other mobile devices 9.

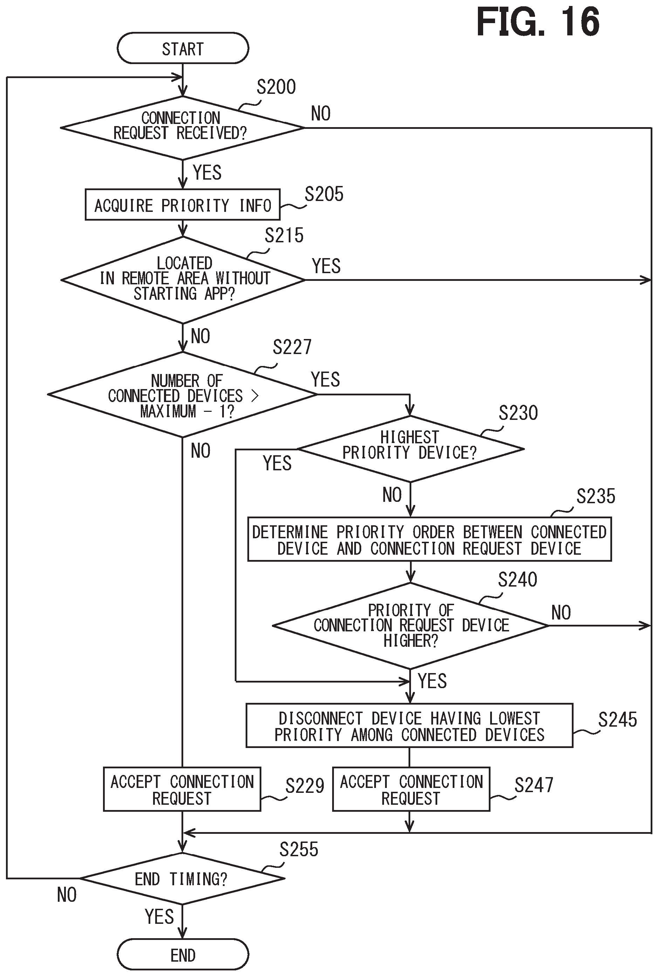

FIG. 16 is a flowchart showing a communication connection management process according to the present embodiment. For process similar to or same as the flowchart shown in FIG. 12, the same reference symbol is assigned to simplify or omit the explanation.

In the flowchart of FIG. 16, the process in S210 of the flowchart in FIG. 12 is removed. In the flowchart of FIG. 16, in S215, the process determines whether the position of the mobile device 9 belongs to the remote area (or whether the distance to the mobile device 9 corresponds to the remote area) based on the received signal strength ranging result. The result of received signal strength ranging is based on the received signal strength of a connection request when a connection request is received from the mobile device 9. The determination of whether the digital key application is started can be performed based on the information obtained in S205, similar to the first embodiment.

In S215, in response to determining that the digital key application is not started and the mobile device 9 is located in a remote area, the DK-ECU 1 proceeds directly to S255 without disconnecting the communication connection. In the present embodiment, since a communication connection with the new device 9 is not yet established, there is no need to disconnect that communication connection.

In S227, the DK-ECU 1 determines whether the number of currently connected mobile devices 9 is greater than a number obtained by subtracting one from the maximum connection number. In the present embodiment, at this point, a communication connection has not yet been established with the new device 9 from which the connection request is received. Therefore, in order to determine whether the number of mobile devices 9 currently maintaining the communication connection equal to or below the maximum connection number limit even though a communication connection is established with the new device 9, the number of currently connected mobile devices 9 is compared with the number obtained by subtracting one from the maximum connection number. In the present embodiment, the process in S230 to S245 is executed in the same manner as in the first embodiment, except that the detection of the distance and position of the new device 9 is performed based on the received signal strength ranging.

In S227, WHEN the DK-ECU 1 determines that the number of currently connected mobile devices 9 is equal to or less than the number obtained by subtracting one from the maximum connection number, the DK-ECU 1 accepts, in S229, the connection request from the mobile device by sending a response signal to the mobile device 9 that has sent the advertising signal. In this manner, the BLE communication connection is established between the DK-ECU 1 and the mobile device 9.

In the present embodiment, when the DK-ECU 1 determines, in S240, that the priority of the new device 9 from which the connection request is received is not higher than the priority of the mobile device 9 that is currently connected, the communication connection with the new device 9 is not established and the process proceeds directly to S255 without disconnecting the communication connection. In the present embodiment, when the priority determination in S235 and S240 determines that the new device 9 should be given higher priority over the mobile device 9 that is already connected, in S245, the DK-ECU 1 disconnects the communication connection of the mobile device 9 with the lowest priority among the mobile devices 9 that are maintaining the communication connection. Then, in S247, the DK-ECU 1 accepts the connection request to establish a communication connection with the new device 9.

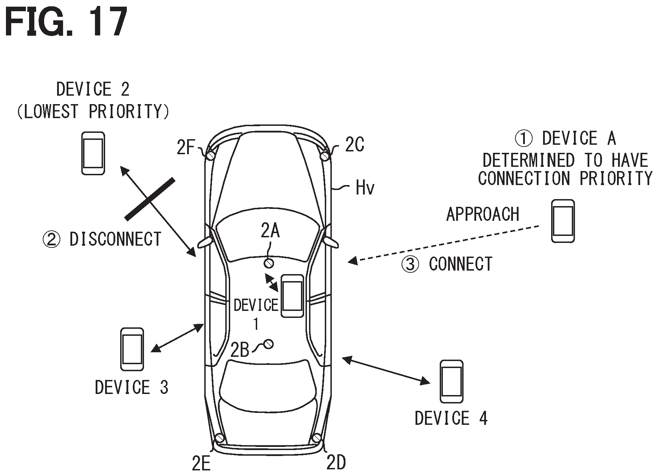

FIG. 17 is an explanatory diagram showing an operation performed by the process shown in the flowchart of FIG. 16. In the example shown in FIG. 17, the maximum connection number is set to 4 same as the example shown in FIG. 15. As shown in FIG. 17, when the vehicle Hv (DK-ECU 1) is communicating with the maximum number of devices, that is, first device to fourth device and the user holding device A approaches the vehicle Hv, the vehicle Hv receives a connection request from the device A. However, at this point, the DK-ECU 1 does not perform establishment of a communication connection with device A.

The DK-ECU 1 performs a priority connection determination for device A, from which a connection request is immediately received. Similar to the first embodiment, priority connection determination is performed when device A enters the remote with the digital key application started or when device A enters the intermediate area without the digital key application started. When the DK-ECU 1 determines in priority connection determination that the communication connection of device A should be prioritized, the DK-ECU 1 disconnects the communication connection with the device having the lowest priority among the first to fourth devices that are currently maintaining the communication connection (in the example of FIG. 17, the second device having the lowest priority). Then, the DK-ECU 1 establishes a communication connection with the device A.

### (Third Embodiment)

The following will describe a vehicle electronic key system to which a communication connection management system, a communication connection management method, and a computer is applied according to a third embodiment of the present disclosure. The vehicle electronic key system according to the present embodiment is configured in the same manner as the vehicle electronic key system according to the first embodiment described above. Therefore, a description of the configuration will be omitted.

In the above-described second embodiment, when the DK-ECU 1 receives a connection request (advertising signal) from a new device 9, priority information of the new device 9 is acquired, and a received signal strength ranging is performed based on the received signal strength of the received connection request. Then, based on the acquired priority information and the distance to the mobile device 9 or position of the mobile device obtained from the received signal strength ranging, a decision is made as to whether to establish a communication connection with the new device.

However, as mentioned above, the accuracy of received signal strength ranging is lower than that of BLECS ranging. Therefore, for example, in S235, when determining the priority between the mobile device 9 that is currently connected and the mobile device 9 from which a connection request is received, there remains a possibility that an appropriate priority cannot be determined.

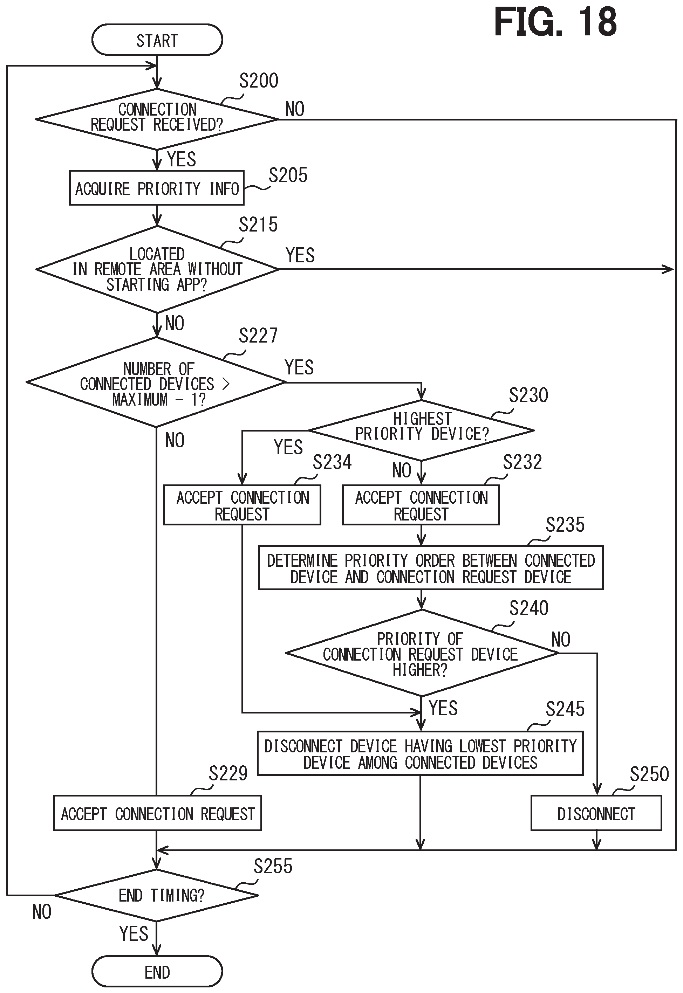

In the present embodiment, as shown in the flowchart of FIG. 18, before executing S235, which determines the priority between a mobile device 9 that is currently connected and a mobile device 9 from which a connection request is received, the system is configured to accept the connection request from a mobile device 9 in S232 and establish a BLE communication connection with the mobile device 9 from which the connection request is received. Then, after the DK-ECU 1 accepts the connection request and establishes a BLE communication connection with the new device, the DK-ECU 1 performs BLECS communication with the new device 9. As a result, the DK-ECU 1 can accurately detect the distance and position of the new device 9 using BLECS ranging, enabling appropriate determination of the priority between the mobile device 9 that is currently connected and the new device 9 from which a connection request is received.

In S215, when the DK-ECU determines whether the mobile device 9 is located in a remote area, similar to the second embodiment, the determination may be made according to the received signal strength ranging result, which is based on the received signal strength when a connection request is received from the mobile device 9. Therefore, it is possible to suppress adverse effect, such as interference, to the communication between the DK-ECU and the currently connected mobile devices 9, in order to determine whether to set a new device 9 from which a connection request is received as a connection target based on the area where the new device 9 is located. This determination can be made in a relatively short amount of time.

In the present embodiment, in S230, in response to determining that the mobile device 9 from which a connection request is newly received has priority information and is determined to be the priority device for which a communication connection should be established first, in S234, the DK-ECU 1 establishes a BLE communication connection with that mobile device 9. However, the establishment of BLE communication connection with the priority device, that is, the mobile device 9, may be performed in S245 after disconnecting the communication connection of the mobile device 9 with the lowest priority among the mobile devices 9 that are currently connected.

In the present embodiment, in S232, a connection request from the mobile device 9 is accepted and a BLE connection is established. Therefore, when the process determines, in S240, that the new device 9 has the lowest priority, the DK-ECU 1 disconnects the communication connection of the new device 9 in S250, similar to the first embodiment. The DK-ECU 1 disconnects the communication connection with the mobile device 9 having the lowest priority among those currently connected in S245. Then, if a communication connection has already been established with the new device 9, the DK-ECU 1 proceeds directly to S255.

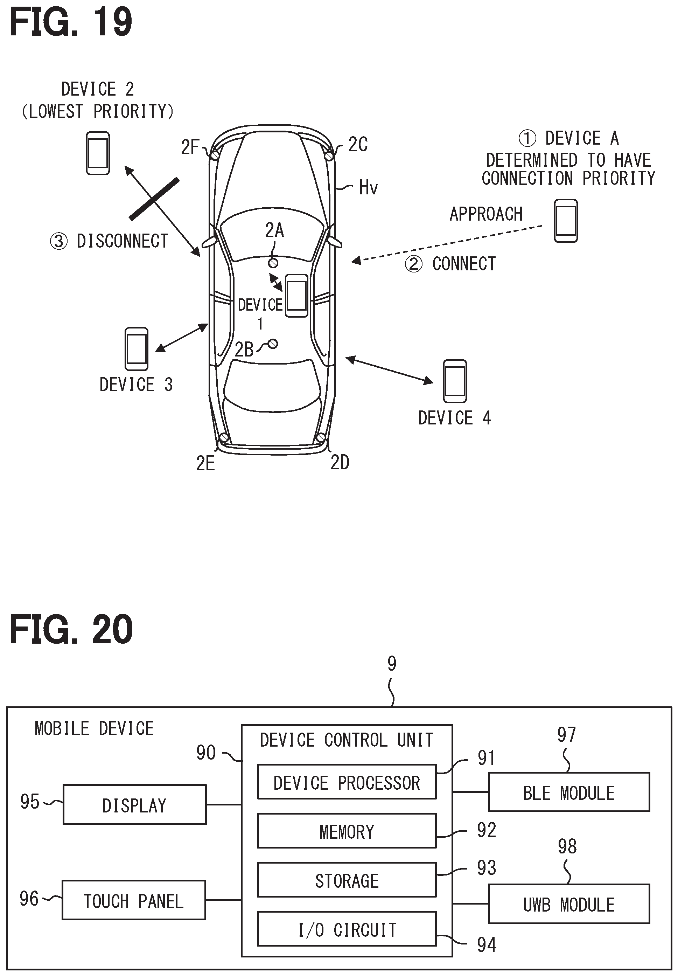

FIG. 19 is an explanatory diagram showing an operation performed by the process shown in the flowchart of FIG. 18. In the example shown in FIG. 19, the maximum connection number is set to 4 same as the example shown in FIG. 15 and the example shown in FIG. 17. As shown in FIG. 19, when the vehicle Hv (DK-ECU 1) is communicating with the maximum number of devices, that is, first device to fourth device and the user holding device A approaches the vehicle Hv, the vehicle Hv receives a connection request from the device A. However, at this point, the DK-ECU 1 does not perform establishment of a communication connection with device A.

The DK-ECU 1 performs a priority connection determination for device A, from which a connection request is immediately received. Similar to the first embodiment, priority connection determination is performed when device A enters the remote with the digital key application started or when device A enters the intermediate area without the digital key application started. In this priority connection determination, the DK-ECU 1 determines whether the mobile device 9 is a priority device, and then establishes a BLE communication connection with the mobile device 9. This configuration can appropriately determine, when the new device 9 is not the priority device, the priority of the new device with the priorities of the first device to the fourth device, which are currently connected to the system, based on the distance and position of each mobile device 9, which is detected with high accuracy by BLECS ranging, In the priority order, when the device A has a relatively high priority, the communication connection of the device with the lowest priority among the first to fourth devices that are currently connected (device 2 in the example in FIG. 19) will be disconnected.

### (Fourth Embodiment)

The following will describe a vehicle electronic key system to which a communication connection management system, a communication connection management method, and a computer is applied according to a fourth embodiment of the present disclosure.

In the first to third embodiments described above, the vehicle Hv (DK-ECU 1) and the mobile device 9 use BLECS communication as a communication method for detecting the distance and position of the mobile device 9 with high precision. The communication method for detecting the distance and position of the mobile device 9 with high precision is not limited to BLECS communication. For example, ultra-wideband (UWB) communication can also be used. In the present embodiment, a configuration for detecting the distance and position of the mobile device 9 using UWB communication, and the operation of UWB communication will be described. The communication connection management process limits the number of mobile devices 9 with which the communication connection can maintain established states at the same time to a predetermined maximum connection number. This process can be performed in the same way, except for the difference in the communication method used. Explanation of the same part will be omitted.

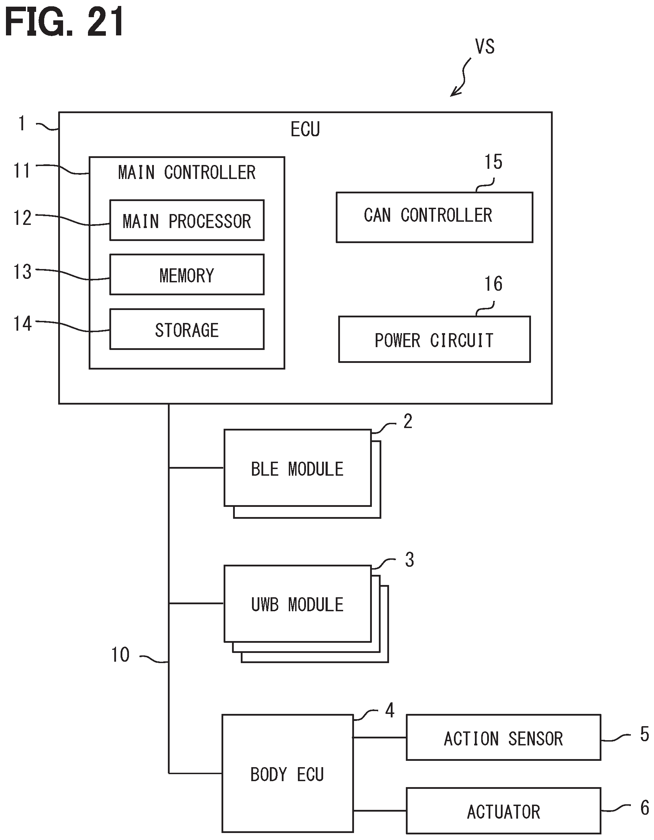

FIG. 20 is a block diagram showing a configuration of a mobile device 9 according to the present embodiment. As shown in FIG. 20, the mobile device 9 according to the present embodiment includes a UWB module 98 in addition to the mobile device 9 according to the first to third embodiments. The UWB module is capable of performing UWB communication. FIG. 21 is a block diagram showing a configuration of a vehicle-mounted system VS according to the present embodiment. As shown in FIG. 21, the vehicle-mounted system VS according to the present embodiment includes multiple UWB modules 3 each capable of performing UWB communication, in addition to the vehicle-mounted system VS according to the first to third embodiments.

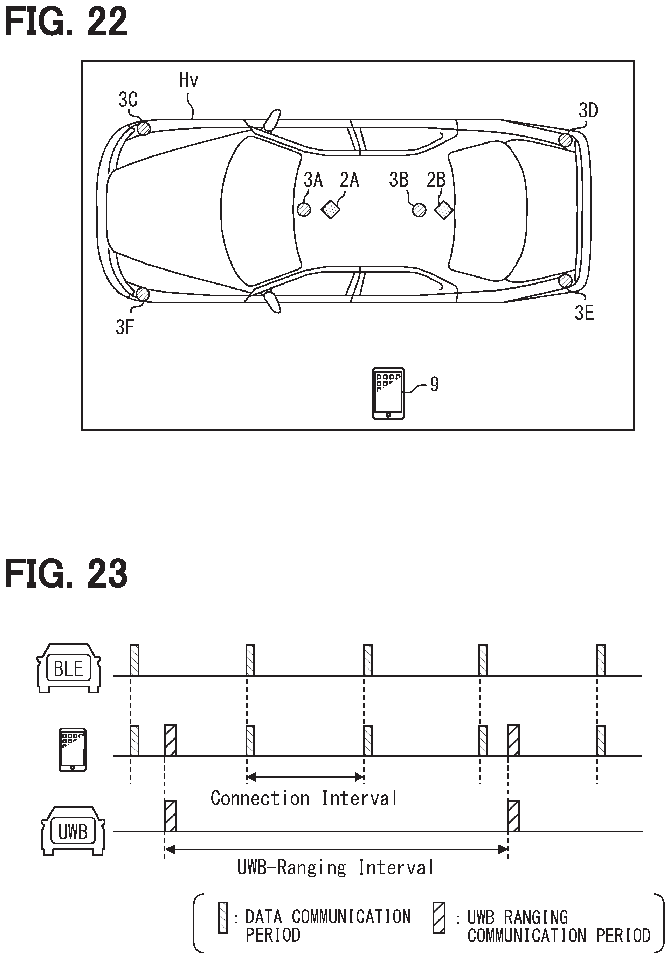

FIG. 22 shows an arrangement example of the BLE module 2 and UWB modules 3 relative to the vehicle Hv according to the present embodiment. The BLE module 2 according to the present embodiment is capable of performing BLE communication. In the example shown in FIG. 22, anchors 2A and 2B of the BLE module 2 are located at the front inside area and rear inside area of the vehicle, respectively. Note that the number of BLE modules 2 may also be set to one. Therefore, when measuring the received signal strength of BLE communication, it is not possible to specify the exact position of the mobile device 9, and it is only possible to roughly detect the area to which the mobile device 9 belongs.

In the example shown in FIG. 22, the anchors 3A to 3F of the UWB module 3 are located in the front inside area of the vehicle, in the rear inside area of the vehicle, on the front right portion of the vehicle, on the rear right portion of the vehicle, on the rear left portion of the vehicle, and on the front left portion of the vehicle, respectively. Therefore, when the device distance between at least three UWB modules 3 and the mobile device 9 is calculated by performing UWB communication, the exact position of the mobile device 9 can be detected with high accuracy.

Thus, the vehicle-mounted system VS and the mobile device 9 according to the present embodiment are configured to perform UWB communication, which is a wireless communication using the UWB-IR (Ultra Wide Band - Impulse Radio) method, via the respective UWB modules 3 and 98. Specifically, the vehicle-mounted system VS and the mobile device 9 are configured to transmit and receive impulse-like radio waves (hereinafter referred to as impulse signals) used in UWB communication via respective UWB modules 3 and 98. The impulse signal used in the UWB communication has a pulse width of an extremely short time (for example, 2 nanoseconds) and has a bandwidth of 500 MHz or more (that is, an ultra-wide bandwidth).

In UWB communication, multiple channels may be used, as defined in IEEE 802.15.4z. The vehicle-mounted system VS can communicate with the mobile device 9, for example, using the fifth channel of UWB communication. Of course, the vehicle-mounted system VS can be configured to communicate with the mobile device 9 using other channels, such as the third channel or the ninth channel. The third channel has a center frequency of 4492 MHz, the fifth channel has a center frequency of 6489.6 MHz, and the ninth channel has a center frequency of 7987.2 MHz. IEEE (registered trademark) stands for Institute of Electrical and Electronics Engineers, and refers to the American Institute of Electrical and Electronics Engineers. Each channel corresponds to a frequency band of ±250 MHz from the center frequency. The UWB communication may use frequencies such as 3.1 GHz to 4.8 GHz, and 6.0 GHz to 10.6 GHz.

A variety of modulation methods can be used for UWB communication, including on-off keying (OOK), pulse position modulation (PPM), and pulse width modulation (PWM). The on-off modulation is a method of representing information (for example, 0 and 1) based on the presence or absence of an impulse signal. The pulse position modulation method is a method of performing modulation at a pulse generation position. The pulse width modulation method is a method of expressing information by a pulse width. In this example, UWB communication between the vehicle-mounted system VS and the mobile device 9 is performed using the OOK method. Data transmission via UWB communication can be achieved using multiple impulse signals. Hereafter, data signals exchanged via UWB communication will be referred to as UWB signals. Because UWB signals contain multiple impulse signals, they can also be referred to as pulse sequence signals.

The UWB modules 3 and 98 each is a communication module for performing UWB communication. The UWB modules 3 and 98 output the received data to the DK-ECU 1 and the device control unit 90, respectively. The UWB modules 3 and 98 can transmit UWB signals corresponding to the data to be transmitted based on instructions from the DK-ECU 1 and the device control unit 90, respectively. The UWB modules 3 and 98 can also transmit and receive UWB signals for ranging purpose based on instructions from the DK-ECU 1 and the device control unit 90, respectively. Thus, the operations of the UWB modules 3 and 98 are controlled by the DK-ECU 1 and the device control unit 90, respectively.

For example, when the DK-ECU 1 performs UWB communication with the mobile device 9, the DK-ECU can instruct any UWB module 3 to transmit a UWB signal. When the device control unit 90 receives a UWB signal transmitted from the vehicle-mounted system VS via the UWB module 98, the device control unit transmits a response signal corresponding to the received signal via the UWB module 98. For example, when the device control unit 90 receives a UWB signal as a search signal, the device control unit can return a UWB signal modulated with a code including the device ID of the mobile device 9 to the vehicle-mounted system VS as the response signal. The search signal is a signal for the vehicle-mounted system VS to search for the mobile device 9, and is a type of signal requesting the mobile device 9 to return the response signal. The UWB signal transmitted by the mobile device 9 may include a code indicating the source or destination of transmission, and the UWB signal transmitted by the vehicle-mounted system VS may include a code indicating the source or destination of transmission.

When the BLE communication connection is not established, the DK-ECU 1 and the device control unit 90 may stop the operations of the UWB modules 3 and 98 and, for example, set the UWB modules as sleep states. For example, the device control unit 90 may activate the UWB module 98 in response to the establishment of BLE communication connection with the vehicle-mounted system VS, thereby enabling UWB communication. This configuration reduces the power consumption of UWB module 98. The device control unit 90 may be configured to, after establishing the BLE communication connection with the vehicle-mounted system VS, start the UWB module 98 under a condition that a UWB ranging start request from the DK-ECU 1 is received via the BLE communication.

The DK-ECU 1 can instruct the UWB module 3 to execute UWB ranging process, which includes UWB communication for ranging purpose. For example, the DK-ECU 1 can perform a cyclic measurement process that instructs each of the multiple UWB modules 3 to perform UWB ranging process in sequence. The DK-ECU 1 can periodically perform cyclic measurement process after a BLE communication connection is established between the vehicle Hv and the mobile device 9. The DK-ECU 1 may determine the start timing of the cyclic measurement process or dynamically change the cyclic measurement interval, depending on the value of the received signal strength of the BLE signal observed within an immediate recent predetermined time period Alternatively, the DK-ECU 1 may perform the cyclic measurement process in response to detection of predetermined event that requires the position of the mobile device 9 to be detected. The UWB ranging process described above measures the distance from each UWB module 3 to the mobile device 9, and the position of the mobile device 9 is detected based on the distances that are measured. Each UWB module 3 is also referred to as an anchor.

Each UWB module 98 is equipped with an antenna for UWB communication, a transceiving circuit, a UWB controller, and the like. The transceiving circuit is configured to perform a signal processing related to modulation and demodulation. The UWB modules 3, 98 each is a microcomputer that controls the operation of the UWB module 3 and generates the UWB ranging data to be described below.

Each UWB module 3 performs UWB ranging process based on an instruction from the DK-ECU 1. The UWB ranging process includes acquiring the radio wave propagation time (in other words, flight time) from each UWB module 3 to the mobile device 9, and measuring the device distance based on the acquired radio wave propagation time. The UWB ranging process includes, as the UWB communication for ranging purpose, transmitting a predetermined pattern of UWB signal to the mobile device 9 and receiving a UWB signal as a response signal from the mobile device 9. In the UWB ranging process, the UWB signal exchanged between the UWB module 3 and the mobile device 9 may be a single impulse signal, or a pulse sequence signal in which multiple impulse signals are arranged in a predetermined pattern.

The UWB controller of each UWB module 3 measures the round-trip time (RTT), which is the elapsed time from transmission of a UWB signal to receiving of a response signal from the mobile device 9, and calculates the device distance based on the RTT. The RTT corresponds to the round-trip flight time of UWB signal. In the present embodiment, the UWB controller may calculate the device distance by multiplying half of the value obtained by subtracting a predetermined correction value from the RTT by the radio wave propagation time. The correction value here is a parameter used to offset the response processing time in the mobile device 9 and the delay time in the UWB module 3. A specific value of the correction value can be appropriately set. Each UWB module 3 transmits the calculated device distance to the DK-ECU 1 as the UWB ranging data. The UWB module 3, which has performed the UWB ranging process, stops operation either in self-control manner or based on an instruction from the DK-ECU 1. The main controller 11 of the DK-ECU 1 may be configured to perform the process for converting RTT to distance.

### (Interaction between vehicle-mounted system VS and mobile device 9 when performing UWB communication)

FIG. 23 shows an example of interaction between the mobile device 9 and the vehicle-mounted system VS when they perform UWB ranging communication. When the mobile device 9 supports UWB ranging communication and the mobile device 9 is registered (paired) as an owner device or a friend device in the vehicle-mounted system VS, the following process is executed in addition to the process described in the first embodiment.

For example, after exchanging encryption keys for BLE communication, the mobile device 9 and the vehicle-mounted system VS each generates a URSK (UWB Ranging Secret Key), which is a key used for UWB ranging communication, and shares the generated URSK via BLE communication. The URSK can be used to create information that proves the communication partner in UWB ranging communication is the authenticated communication partner. By having the generated URSK codes exchanged between the DK-ECU 1 and the mobile device 9, the DK-ECU 1 can perform UWB ranging communication with the mobile device 9 as the communication partner.

The DK-ECU 1 registers and saves the generated URSK by associating the URSK with the ID of mobile device 9 (mobile device ID). The DK-ECU 1 may confirm that the UWB ranging communication with the mobile device 9 is possible by actually performing the UWB ranging using the generated URSK.

As shown in FIG. 23, the vehicle-mounted system VS periodically performs data communication using BLE and ranging communication using UWB with the mobile device 9. The UWB ranging interval, which is the interval at which the DK-ECU 1 causes the UWB module 3 to perform UWB ranging communication, can be set to three or four times the connection interval. By increasing the UWB ranging interval in this way, power consumption can be reduced. However, the CS ranging interval may be set the same as the connection interval.

Note that UWB-Ranging Interval in FIG. 23 indicates the UWB ranging interval. A single UWB ranging communication may include multiple UWB ranging communications from respective UWB modules 3. The UWB ranging interval can be set to a value between 150 milliseconds and 400 milliseconds, for example, 180 milliseconds or 280 milliseconds.

The position detection of the mobile device using the UWB signal (UWB ranging) described above may be initiated when the received signal strength of the BLE signal becomes equal to or larger than a predetermined strength threshold, or when the distance between the positions detected by GPS receivers falls equal to or shorter than a distance threshold. With this configuration, power consumption can be further reduced.

When any of the above-described conditions for starting UWB ranging communication is satisfied, the DK-ECU 1 can transmit a request to start UWB ranging to the multiple UWB modules 3. In response to the UWB ranging start request, multiple UWB modules 3 each transitions from a sleep state to a wake-up state. Then, the multiple UWB modules 3 transmit UWB ranging signals. In other words, each of the multiple UWB modules 3 is in a sleep state while the UWB ranging is not being performed.

Similar to CS ranging communication, the UWB ranging communication may be terminated, for example, when the power of the mobile device 9 is turned off and the BLE communication is disconnected, or when the received signal strength of BLE signal decreases equal to or lower than a predetermined strength threshold. The strength threshold used when terminating UWB ranging communication may be the same as or different from the strength threshold used to initiate the UWB ranging communication. The UWB ranging communication may be terminated when no action is taken on the vehicle for a predetermined period of time after the UWB ranging communication has started. The UWB ranging communication may be terminated when the user gets into the vehicle Hv and turns on the start switch of the vehicle.

When any of the above-described conditions for ending UWB ranging communication is satisfied, the DK-ECU 1 can transmit a request to end UWB ranging to the multiple UWB modules 3. In response to this end request, multiple UWB modules 3 each ends the UWB ranging communication. After the multiple UWB modules 3 end the UWB ranging communication, if a new request to start UWB ranging is not received within a predetermined period, the UWB modules 3 may be configured to enter sleep states.

After the UWB ranging communication is terminated in response to the user turning on the start switch, the UWB ranging communication may be started again in response to the opening and closing of the door of vehicle Hv. This enables detection of the user operation that the mobile device 9 has been taken outside the vehicle while the vehicle is temporarily stopped remaining the start switch in turned on state, by the UWB ranging communication,

### (Modifications)

One exemplary embodiment of the present disclosure is explained above. The present disclosure is not limited to the above-described embodiment, and can be implemented by various modifications without departing from the spirit of the present disclosure.

### (First modification)

For example, in the fourth embodiment described above, the BLE module 2 may be configured to perform BLECS communication in addition to BLE communication. The system may be configured to implement both BLECS communication and UWB communication as communication methods for detecting the distance and position of the mobile device 9 with high accuracy. By implementing both BLECS and UWB communication, for example, when the mobile device 9 is located in a position that is blocked by a vehicle Hv or a body of a person, the accuracy of UWB ranging may decrease. But BLECS ranging makes it possible to detect the position of the mobile device 9 with high accuracy even though the mobile device 9 is blocked by an object.

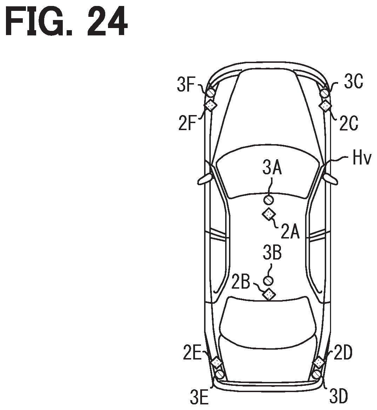

In order to detect the position of mobile device 9 by BLECS ranging, the vehicle-mounted system VS may have multiple BLE modules (BLE anchors) 2A to 2F, as shown in FIG. 24 as an example. In the example shown in FIG. 24, multiple BLE modules 2A to 2F are arranged in close proximity to multiple UWB modules 3A to 3F. In this case, the position of the mobile device 9 may be detected based on a combination of the UWB ranging results from multiple UWB modules 3 and the CS ranging results from multiple BLE modules 2. In this case, the DK-ECU 1 may detect the position (area) of the mobile device 9 by multilateration measuring method based on the device distance measured by UWB ranging and the device distance measured by CS ranging. Alternatively, the position of the mobile device may be detected separately based on the UWB ranging results and based on the CS ranging results, and then the final position of the mobile device may be detected based on the separately determined positions of the mobile device. For example, when the calculated two positions of the mobile device 9 are equivalent to one another, the calculated position can be determined as the final position of the mobile device 9. When the calculated two positions of the mobile device 9 do not match with one another, the position having higher confidence may be selected as final position based on parameters, such as signal strength used in the ranging process.

In a configuration where multiple BLE modules 2 are used to perform CS ranging, one BLE module 2 may distribute the channel information and timing information used for CS ranging process to the other BLE modules 2, thereby enabling the other BLE modules 2 to intercept (sniffer) the CW signal transmitted from the mobile device 9.

In BLE communication, frequency hopping occurs after a communication connection is established, so normally, only the BLE module 2 that is connected can capture data signal from the mobile device 9. With sniffing technology, by providing channel information and timing information to other BLE modules 2, the other BLE modules 2 can also capture data signal and CW signal from the mobile device 9. As a result, other BLE modules 2 can detect the received signal strength, received phase, received time, or the like from the mobile device 9 without establishing communication connection with the mobile device 9. Therefore, the configuration using sniffing technology has the advantage that multiple BLE modules 2 can perform CS ranging process in parallel.

### (Second modification)

In the embodiments described above, the BLE module 2 is located outside the housing of the DK-ECU 1. The present disclosure is not limited to this configuration. For example, the BLE module 2 may be located inside the housing of the DK-ECU 1.

### (Third modification)

In the embodiment described above, the UWB module 3 measures the RTT, which is the elapsed time from the transmission time of UWB signal to reception of a response signal from the mobile device 9, and calculates the device distance based on the RTT. In addition to measuring RTT, or as an alternative to measuring RTT, the UWB module 3 can also measure the arrival angle and arrival time difference of the UWB signal, and detect the position of the mobile device 9 based on the measured arrival angle and arrival time difference. For example, if the system is configured to measure the arrival angle of the UWB signal in addition to measuring the RTT of the UWB signal, it becomes possible to detect the position (or area) of the mobile device 9 around the vehicle Hv with smaller number of UWB modules 3.

### (Fourth modification)

The BLE controller 23 may calculate the device distance using RTT instead of, or in addition to, the inter-frequency phase difference. The RTT measured by the BLE controller 23 is the time from the transmission of a predetermined BLE signal requesting a response until the reception of a response signal from the mobile device 9. Transmitting and receiving signals for measuring RTT is also an example of CS ranging communication. Calculating the phase change coefficient or RTT is essentially equivalent to calculating the device distance. Therefore, the process of generating data indicating device distance, such as a phase change coefficient or RTT, based on the phase of the signal received from the mobile device 9 and the time of flight, is also included in the concept of CS ranging. Calculating the distance also includes generating data indirectly indicating the distance.

### (Fifth modification)

The communication method between the BLE module 2 and the mobile device 9 is not limited to BLE. The communication method may adopt Bluetooth Classic or a different method. The wireless communication compliant to Bluetooth includes both BLE communication and communication compliant to Bluetooth Classic.

### (Sixth modification)

In the embodiments described above, the DK-ECU 1 is configured as an independent electronic control unit in the vehicle-mounted system VS. The present disclosure is not limited to this configuration. For example, the functions of DK-ECU 1 may be integrated with another ECU configured to perform different functions.

### (Supplement to acquiring method of single frequency phase difference)

The BLE module 2 may acquire the single frequency phase difference for each frequency by the active two-way method or the passive two-way method, and calculate the inter-frequency phase difference using the single frequency phase difference. An outline of the active two-way method and the passive two-way method will be described.

The active two-way method is a method in which an initiator and a reflector mutually transmit and receive a CW signal to detect a phase difference between a transmission signal and a received signal, and a single frequency phase difference is specified using the two phase differences. The active two-way system includes a step in which an initiator and a reflector mutually transmitting and receiving CW signals to each other, and a step in which the reflector transmitting the observed received phase (θr) to the initiator.

The initiator is a device that initiates communication, in other words, a device that requests a response. The reflector is a device that returns a response. In the above embodiment, the BLE module 2 corresponds to the initiator, and the mobile device 9 corresponds to the reflector.

Suppose that the initial phase of the initiator is δi, the initial phase of the reflector is δr, the single-frequency phase difference that should be observed depending on the distance between the initiator and the reflector is φ, and the target frequency is f, then these parameters satisfy a relationship θr = φ + δi - δr and θi = φ - δi + δr. Based on this relationship, the average of θi and θr is the single-frequency phase difference (φ), in which the initial phase components of the initiator and reflector are cancelled out respectively. The active two-way method corresponds to a method of calculating an average value of the received phase at the initiator and the received phase at the reflector as a single frequency phase difference. Since a phase difference due to one-way propagation assumed, the average value of θi and θr is used as the single-frequency phase difference. As another aspect, in a case where a phase difference due to reciprocating propagation is assumed as the single frequency phase difference, the single frequency phase difference can be obtained by θi+θr.

The passive two-way method is also a method in which the initiator and the reflector transmit and receive the CW signal to and from each other. The difference from the active two-way method is that the reflector reflects the received phase of the CW signal transmitted from the initiator on the initial phase of the transmission signal, and then transmits the signal. For example, when the received phase at the reflector is θr, a CW signal expressed as z(t) = A·exp{-i(ωt+θr+2πn)} is transmitted. Herein, A represents amplitude. Herein, ω is the angular frequency corresponding to the target frequency (f), and has the relationship ω = 2πf. Herein, n is a natural number and corresponds to the interval between receiving of CW signal by the reflector and transmission of CW signal. According to this method, the received phase monitored by the initiator does not include the initial phase component of the reflector. The received phase observed by the initiator will be the same value as when receiving a CW signal that has been reflected back by a reflective surface, such as a wall. As a result, the initiator can calculate the single frequency phase difference without acquiring the received phase from the reflector. The passive two-way method has an advantage that the reflector does not need to transmit the received phase message, as compared with the active two-way method. As described above, the single frequency phase difference and the inter-frequency phase difference can be executed in various methods.

### (Target object to which the present disclosure is applied)

The present disclosure is applicable to vehicles traveling on a road. In other words, the present disclosure can be installed in multiple vehicles capable of traveling on a road, including not only four-wheeled vehicles but also two-wheeled vehicles, three-wheeled vehicles, and vehicles with more than four wheels. Except the application on vehicles, the present disclosure can be applied to a situation where it is necessary to detect a position of a user holding the mobile device 9.

### (Appendix 1)

The present specification discloses multiple technical concepts listed below and multiple combinations thereof. The following combination of technical concepts applies not only to position detection systems, but also to position detection methods and the computers that perform those methods.

### (Technical Idea 1)

A communication connection management system, which manages a communication connection between a target object (Hv) and multiple mobile devices (9), includes a communication unit (2) mounted on the target object and configured to perform a wireless communication with each of the multiple mobile devices. The communication unit sets a maximum connection number for the multiple mobile devices with which the communication connection can be established. The communication connection management system includes an acquisition unit (S205) configured to, in a case where a certain device, which is one of the multiple mobile devices, should be prioritized for the communication connection, acquire priority information from the certain device by performing the wireless communication with the certain device using the communication unit. The priority information indicates that the certain device is required to be given the priority for the communication connection. The communication connection management system includes a communication connection control unit (S210, S225, S227, S230, S234, S235, S240, S245, S247, S250) configured to, in a case where the number of the multiple mobile devices currently in communication connection states is equal to the maximum connection number and the acquisition unit newly acquires the priority information from a new device, which is one of the multiple mobile devices, by performing the wireless communication with the new device, disconnect the communication connection with one of the multiple mobile devices currently in the communication connection states and establish the communication connection with the new device.

### (Technical Idea 2)

In the communication connection management system according to technical idea 1, the priority information indicates that the certain device is an owner device.

### (Technical Idea 3)

In the communication connection management system according to technical idea 2, the priority information indicates that the certain device is a friend device that has been authorized by a user who owns the owner device to access or use the target object and the friend device performs the wireless communication with the communication unit for the first time.

### (Technical Idea 4)

In the communication connection management system according to any one of technical ideas 1 to 3, the communication connection control unit is further configured to determine, for the maximum connection number of the multiple mobile devices currently in the communication connection states, a priority order related to the communication connection and disconnect the communication connection with a lowest priority device, which is one of the multiple mobile devices and has the lowest priority.

### (Technical Idea 5)

In the communication connection management system according to any one of technical ideas 1 to 4, the communication connection control unit is further configured to, in a case where the number of the multiple mobile devices currently in the communication connection states is equal to the maximum connection number and the acquisition unit acquires no priority information from the new device, which is one of the multiple mobile devices, by performing the wireless communication with the new device, determine a priority order related to the communication connection among the multiple mobile devices currently in the communication connection states and the new device, and disconnect the communication connection with a lowest priority device, which is one of the multiple mobile devices and has the lowest priority.

### (Technical Idea 6)

In the communication connection management system according to any one of technical ideas 1 to 5, the communication connection control unit is further configured to determine the priority order related to the communication connection by considering at least one of: a distance between each of the multiple mobile devices and the target object; an area to which each of the multiple mobile devices belongs when the area is defined with respect to the target object; a moving trajectory of each of the multiple mobile devices; a moving direction of each of the multiple mobile devices; whether an application for accessing the target object installed in each of the multiple mobile devices has been started, or a user ID indicating an owner of each of the multiple mobile devices.

### (Technical Idea 7)

In the communication connection management system according to technical idea 6, the communication connection control unit is further configured to set a higher priority for one of the multiple mobile devices, which is located close to the target object, than another one of the multiple mobile devices, which is located far from the target object.

### (Technical Idea 8)

In the communication connection management system according to technical idea 6 or 7, the communication connection control unit is further configured to set a higher priority for one of the multiple mobile devices, which is approaching the target object, than another one of the multiple mobile devices, which is receding from the target object.

### (Technical Idea 9)

In the communication connection management system according to any one of technical ideas 6 to 8, the communication connection control unit is further configured to set a higher priority for one of the multiple mobile devices, which has no same user ID, than another one of the multiple mobile devices, which has the same user ID.

### (Technical Idea 10)

In the communication connection management system according to any one of technical ideas 1 to 9, the communication connection control unit is further configured to not establish the communication connection with the new device, even though the new device is required to be given the priority for the communication connection, until the new device approaches the target object to a predetermined distance or enters a predetermined area.

### (Technical Idea 11)

In the communication connection management system according to technical idea 10, in a case where the new device has started an application for accessing the target object, the communication connection control unit is configured to determine whether to establish the communication connection with the new device, regardless of whether the new device has the priority information or the new device is located further than the predetermined distance or further than the predetermined area defined relative to the target object.

### (Technical Idea 12)

In the communication connection management system according to technical idea 11, in a case where the new device, which is located further than the predetermined distance or further than the predetermined area defined relative to the target object, has the priority information and has started the application for accessing the target object, the communication connection control unit is configured to establish the communication connection with the new device with a higher priority than the maximum connection number of the multiple mobile devices currently in the communication connection states.

### (Technical Idea 13)

In the communication connection management system according to technical idea 11 or 12, in a case where the new device, which is located further than the predetermined distance or further than the predetermined area defined relative to the target object, has no priority information and has started the application for accessing the target object, the communication connection control unit is configured to determine a priority order related to the communication connection among the maximum connection number of the multiple mobile devices currently in the communication connection states and the new device, and establish the communication connection with the new device when the priority of the new device is higher than at least one of the maximum connection number of the multiple mobile devices currently in the communication connection states.

### (Technical Idea 14)

In the communication connection management system according to any one of technical ideas 1 to 13, the communication unit performs bluetooth low energy channel sounding (BLECS) communication, which transmits and receives a continuous wave signal whose frequency is periodically changed, as the wireless communication with each of the multiple mobile devices.

### (Technical Idea 15)

In the communication connection management system according to any one of technical ideas 1 to 13, the communication unit performs ultra-wideband (UWB) communication, which transmits and receives an ultra-wideband signal, as the wireless communication with each of the multiple mobile devices.

### (Technical Idea 16)

In the communication connection management system according to any one of technical ideas 1 to 13, the communication unit performs, as the wireless communication with each of the multiple mobile devices, bluetooth low energy channel sounding (BLECS) communication, which transmits and receives a continuous wave signal whose frequency is periodically changed, and an ultra-wideband (UWB) communication, which transmits and receives an ultra-wideband signal.

### (Appendix 2)

Each of the various flowcharts illustrated in the present disclosure is an example, and the number of steps constituting the flowchart and the execution order of the processing can be appropriately changed. The terms used in the present disclosure, such as "wireless signal," "BLE signal," "data," "message," "packet," "frame," "package," "dataset," and "information," may be interpreted interchangeably.

The device, the system and the method there of, which have been described in the present disclosure, may be implemented by a dedicated computer which constitutes a processor programmed to execute one or more functions corresponding to the computer program. The device and the method thereof described in the present disclosure may be implemented by a dedicated hardware logic circuit. The device and the method thereof described in the present disclosure may be implemented by one or more dedicated computers which is constituted by combinations of a processor for executing computer programs and one or more hardware logic circuits. For example, partial or all of the functions of the BLE controller 23 may be implemented as hardware circuits. A configuration in which a certain function is implemented by hardware logic circuitry includes a configuration in which the function is implemented using one or more ICs or the like. As the processor (for example, arithmetic core), a CPU, an MPU, a GPU, a DFP (Data Flow Processor), or the like can be adopted. Partial or all of the functions of the BLE controller 23 may be implemented using a system-on-chip (SoC), an integrated circuit (IC), or a field-programmable gate array (FPGA). The concept of IC includes ASIC (Application Specific Integrated Circuits). The computer program described above may be stored in a computer-readable non-transitory tangible storage medium as instructions to be executed by a computer. As a storage medium for storing the computer program, a hard disk drive (i.e., HDD), a solid state drive (i.e., SSD), a flash memory, or the like can be adopted. In the present disclosure, a program for causing a computer to function as the BLE controller 123 or the main controller 11, and a form of a non-transitory tangible storage medium such as a semiconductor memory in which the program is stored are also included in the scope of the present disclosure.

## Claims

1. A communication connection management system, which manages a communication connection between a target object (Hv) and multiple mobile devices (9), the communication connection management system comprising:
a communication unit (2) mounted on the target object and configured to perform a wireless communication with each of the multiple mobile devices, wherein the communication unit sets a maximum connection number for the multiple mobile devices with which the communication connection can be established;
an acquisition unit (S205) configured to, in a case where a certain device, which is one of the multiple mobile devices, should be prioritized for the communication connection, acquire priority information from the certain device by performing the wireless communication with the certain device using the communication unit, wherein the priority information indicates that the certain device is required to be given the priority for the communication connection; and
a communication connection control unit (S210, S225, S227, S230, S234, S235, S240, S245, S247, S250) configured to, in a case where the number of the multiple mobile devices currently in communication connection states is equal to the maximum connection number and the acquisition unit newly acquires the priority information from a new device, which is one of the multiple mobile devices, by performing the wireless communication with the new device, disconnect the communication connection with one of the multiple mobile devices currently in the communication connection states and establish the communication connection with the new device.

2. The communication connection management system according to claim 1, wherein
the priority information indicates that the certain device is an owner device.

3. The communication connection management system according to claim 2, wherein
the priority information indicates that the certain device is a friend device that has been authorized by a user who owns the owner device to access or use the target object and the friend device performs the wireless communication with the communication unit for the first time.

4. The communication connection management system according to claim 1, wherein
the communication connection control unit is further configured to determine, for the maximum connection number of the multiple mobile devices currently in the communication connection states, a priority order related to the communication connection and disconnect the communication connection with a lowest priority device, which is one of the multiple mobile devices and has the lowest priority.

5. The communication connection management system according to claim 1, wherein
the communication connection control unit is further configured to:
in a case where the number of the multiple mobile devices currently in the communication connection states is equal to the maximum connection number and the acquisition unit acquires no priority information from the new device, which is one of the multiple mobile devices, by performing the wireless communication with the new device,
determine a priority order related to the communication connection among the multiple mobile devices currently in the communication connection states and the new device; and
disconnect the communication connection with a lowest priority device, which is one of the multiple mobile devices and has the lowest priority.

6. The communication connection management system according to claim 4 or 5, wherein
the communication connection control unit is further configured to determine the priority order related to the communication connection by considering at least one of:
a distance between each of the multiple mobile devices and the target object;
an area to which each of the multiple mobile devices belongs when the area is defined with respect to the target object;
a moving trajectory of each of the multiple mobile devices;
a moving direction of each of the multiple mobile devices;
whether an application for accessing the target object installed in each of the multiple mobile devices has been started, or
a user ID indicating an owner of each of the multiple mobile devices.

7. The communication connection management system according to claim 6, wherein
the communication connection control unit is further configured to set a higher priority for one of the multiple mobile devices, which is located close to the target object, than another one of the multiple mobile devices, which is located far from the target object.

8. The communication connection management system according to claim 6, wherein
the communication connection control unit is further configured to set a higher priority for one of the multiple mobile devices, which is approaching the target object, than another one of the multiple mobile devices, which is receding from the target object.

9. The communication connection management system according to claim 6, wherein
the communication connection control unit is further configured to set a higher priority for one of the multiple mobile devices, which has no same user ID, than another one of the multiple mobile devices, which has the same user ID.

10. The communication connection management system according to any one of claims 1 to 3, wherein
the communication connection control unit is further configured to not establish the communication connection with the new device, even though the new device is required to be given the priority for the communication connection, until the new device approaches the target object to a predetermined distance or enters a predetermined area.

11. The communication connection management system according to claim 10, wherein,
in a case where the new device has started an application for accessing the target object, the communication connection control unit is configured to determine whether to establish the communication connection with the new device, regardless of whether the new device has the priority information or the new device is located further than the predetermined distance or further than the predetermined area defined relative to the target object.

12. The communication connection management system according to claim 11, wherein,
in a case where the new device, which is located further than the predetermined distance or further than the predetermined area defined relative to the target object, has the priority information and has started the application for accessing the target object, the communication connection control unit is configured to establish the communication connection with the new device with a higher priority than the maximum connection number of the multiple mobile devices currently in the communication connection states.

13. The communication connection management system according to claim 11, wherein,
in a case where the new device, which is located further than the predetermined distance or further than the predetermined area defined relative to the target object, has no priority information and has started the application for accessing the target object, the communication connection control unit is configured to:
determine a priority order related to the communication connection among the maximum connection number of the multiple mobile devices currently in the communication connection states and the new device; and
establish the communication connection with the new device when the priority of the new device is higher than at least one of the maximum connection number of the multiple mobile devices currently in the communication connection states.

14. The communication connection management system according to any one of claims 1 to 3, wherein
the communication unit performs bluetooth low energy channel sounding (BLECS) communication, which transmits and receives a continuous wave signal whose frequency is periodically changed, as the wireless communication with each of the multiple mobile devices.

15. The communication connection management system according to any one of claims 1 to 3, wherein
the communication unit performs ultra-wideband (UWB) communication, which transmits and receives an ultra-wideband signal, as the wireless communication with each of the multiple mobile devices.

16. The communication connection management system according to any one of claims 1 to 3, wherein
the communication unit performs, as the wireless communication with each of the multiple mobile devices, bluetooth low energy channel sounding (BLECS) communication, which transmits and receives a continuous wave signal whose frequency is periodically changed, and an ultra-wideband (UWB) communication, which transmits and receives an ultra-wideband signal.

17. A communication connection management method executed by a computer for managing a communication connection between a target object (Hv) and multiple mobile devices (9), wherein the target object has a communication unit (2) that performs a wireless communication with each of the multiple mobile devices and the communication unit sets a maximum connection number for the multiple mobile devices with which the communication connection can be established,
the communication connection management method comprising:
acquiring (S205), in a case where one of the multiple mobile devices should be prioritized for the communication connection, priority information from the one of the multiple mobile devices by performing the wireless communication with the one of the multiple mobile devices using the communication unit, the priority information indicating that the one of the multiple mobile devices is required to be given the priority for the communication connection; and
in a case where the number of the multiple mobile devices currently in communication connection states is equal to the maximum connection number and the priority information is acquired from a new device, which is one of the multiple mobile devices, by performing the wireless communication with the new device, disconnecting the communication connection with one of the multiple mobile devices currently in the communication connection states and establishing the communication connection with the new device (S210, S225, S227, S230, S234, S235, S240, S245, S247, S250).

18. A computer that executes a process to manage a communication connection between a target object (Hv) and multiple mobile devices (9), wherein the target object has a communication unit (2) that performs a wireless communication with each of the multiple mobile devices and the communication unit sets a maximum connection number for the multiple mobile devices with which the communication connection can be established,
the computer is configured to execute the following instructions, the instructions comprising:
acquiring (S205), in a case where one of the multiple mobile devices should be prioritized for the communication connection, priority information from the one of the multiple mobile devices by performing the wireless communication with the one of the multiple mobile devices using the communication unit, the priority information indicating that the one of the multiple mobile devices is required to be given the priority for the communication connection; and
in a case where the number of the multiple mobile devices currently in communication connection states is equal to the maximum connection number and the priority information is acquired from a new device, which is one of the multiple mobile devices, by performing the wireless communication with the new device, disconnecting the communication connection with one of the multiple mobile devices currently in the communication connection states and establishing the communication connection with the new device (S210, S225, S227, S230, S234, S235, S240, S245, S247, S250).
